# DEMANDE DE BREVET EUROPEEN

(11) **EP 0 926 075 A1**
(43) Date de publication de la demande: **30.06.1999**
(21) Numéro de dépôt: 98402979.3
(22) Date de dépôt: 27.11.1998
(51) Int. Cl.: B65D 47/08, B65D 47/20, B29C 45/00

(54) **Capsule service a languette triple fonction**

(30) Priorité: 24.12.1997 FR 9716521
(71) Demandeur: Sofiplast, 08029 Barcelona (ES)
(72) Inventeur: Fort Prades, Josep, 08551 Tona (Barcelona) (ES)
(74) Mandataire: Derambure, Christian

(57) **Abrégé**

L'invention est relative aux capsules de fermeture de conteneur, en matière plastique.

Elle concerne plus particulièrement la capsule elle-même, seule ou associée à un conteneur, un procédé de fabrication de telles capsules et, enfin un dispositif pour la mise en oeuvre du procédé.

Les capsules (1) visées sont celles classiquement appelées "capsules-service" et du type comprenant :
- une partie de base (3) essentiellement rigide dans son ensemble, incluant une paroi latérale périphérique (8), une paroi transversale (12) et ayant un orifice (15) excentré ; et
- une partie de fermeture (4) et de manoeuvre de commande, essentiellement rigide dans son ensemble, agencée pour pouvoir être montée de façon mobile à pivotement sur la partie de base (3), dans un sens ou dans l'autre et ouvrir ou fermer, respectivement, la communication avec l'orifice (15).

## Description

L'invention est relative aux capsules de fermeture de conteneur, en matière plastique.

Elle concerne plus particulièrement les capsules classiquement appelées "capsules-service" et du type comprenant :
- une partie de base essentiellement rigide dans son ensemble, incluant une paroi latérale périphérique, une paroi transversale et ayant un orifice excentré ; et
- une partie de fermeture et de manoeuvre de commande, essentiellement rigide dans son ensemble, agencée pour pouvoir être montée de façon mobile à pivotement sur la partie de base, dans un sens ou dans l'autre et ouvrir ou fermer, respectivement, la communication avec l'orifice.

Le document FR-A-2728543 révèle un bouchon distributeur comportant une cape sur laquelle est articulée une coiffe par une zone amincie formant charnière. La cape est pourvue d'une ouverture axiale d'écoulement du contenu du récipient. Cette ouverture peut être fermée par un téton porté par un volet de fermeture. La coiffe comporte, outre le volet, une zone périphérique déchirable, et deux zones latérales. La zone déchirable est reliée au volet et aux zones latérales par des ponts ruptibles. Pour ouvrir le récipient, il faut retirer la zone déchirable. Un tel bouchon comporte donc un système d'inviolabilité intégré.

Ce bouchon présente comme inconvénients que la zone déchirable est d'une longueur importante et présente deux angles ce qui rend la fabrication complexe et l'arrachage difficile ; que son esthétique du bouchon est fortement affectée, une fois la zone déchirable arrachée, un creux apparaissant à l'emplacement de la zone déchirable enlevée ; que le volet est relié à la cape par une articulation en forme d'amincissement fragile ; que le volet doit, pour l'ouverture, doit être pivoté de 90° à partir de son bord, l'écoulement du contenu étant axial, l'orifice visible, la périphérie de celui-ci salie par le contenu versé.

Le document FR-A-2679877 décrit une autre réalisation de bouchon à ouverture axiale avec coiffe articulée, équipé d'un système d'inviolabilité.

Le document FR-A-2693985 décrit une capsule à ouverture axiale, à couvercle articulé et dispositif d'inviolabilité encliquetable.

Les documents FR-A-2731983 et EP-A-319408 décrivent des capsules service à ouverture axiale réalisées en une seule pièce par injection.

Les réalisations conformes à ces derniers documents ne peuvent pas donner pleinement satisfaction.

Le bouchon selon le document WO-A-95/34473, comporte un volet monté à pivotement limité sur la cape autour d'un axe placé en position médiane au moyen de saillies du volet, enfoncées à force dans des ouvertures ménagées dans la cape. L'écoulement du contenu est latéral. Ce bouchon est dépourvu de système d'inviolabilité intégré et il est réalisé en deux pièces distinctes ce qui rend complexe tant la fabrication que le montage.

Le document EP-B-558810 révèle une fermeture distributrice pour un récipient comprenant un élément de base moulé d'une seule pièce avec un élément de commande en forme de volet relié à l'élément de base par une bande flexible formant charnière. Alternativement, l'élément de base et l'élément de commande sont moulés en deux pièces reliées par une charnière. Les deux éléments sont agencés dans un collier pivotant de manoeuvre. Une telle fermeture comprend donc au mieux deux pièces, mais, le cas échéant quatre. Aucun système d'inviolabilité intégré n'est prévu. La réalisation et le montage envisagés sont complexes.

Le document WO-A-94/22733 concerne une fermeture du même type général que la précédente. Cette fermeture ne peut être ouverte par inadvertance car l'élément de commande est déplacé grâce au collier.

Le document WO-A-95/23097 révèle une structure particulière incurvée et angulée de charnière telle qu'elle permet l'obtention de positions intermédiaires stables.

Le document WO-A-94/14696 révèle un conteneur ayant, vers la partie de bouchage, des parties articulées formant, respectivement, l'ouverture de décharge axiale, le volet de fermeture pivotant et une sécurité.

Le document DE-U-8908265 révèle un bouchon ayant une partie de base à ouverture radiale, un volet de fermeture et, entre eux, une bande de liaison flexible en deux parties venant se loger à l'intérieur même du bouchon lorsque celui-ci est monté. Cette réalisation est peu satisfaisante et complexe parce que la présence dans le bouchon de la bande flexible est gênante.

Le document CH-A-675410 révèle un dispositif pour détruire l'opercule de scellage d'un récipient caractérisé en ce qu'il est scellé sur le bouchon par l'intermédiaire d'un point de rupture. Selon une réalisation le dispositif de rupture est également un élément d'inviolabilité.

Le document CH-A-674831 concerne un bouchon dont la languette d'inviolabilité rend solidaire la partie basse et le capuchon avant la première utilisation. L'ouverture du bouchon est axiale et située à l'opposé de l'axe d'articulation. La réalisation selon ce document présente un certain nombre d'inconvénients ou de limites : L'évacuation du contenu est axiale. Lors de l'évacuation, le bouchon est sali par le contenu. Le capuchon doit pouvoir pivoter de plus de 90° entre la fermeture et l'ouverture. La charnière est décalée et latérale.

Dans une réalisation la languette d'inviolabilité est située du même coté que l'ouverture avec les inconvénients inhérents.

Dans une autre réalisation, la languette est située du coté opposé à l'ouverture Dans ce cas, les forces nécessaires au montage sont importantes. Les ponts de part et d'autre de la languette doivent être assez importants. D'ailleurs les ponts s'étendent sur une partie rectiligne de languette de longueur substantielle. Et en conséquence le bouchon est à contour carré et non circulaire.

On peut se référer enfin à l'état de la technique comprenant les documents US-A-4462504, ES-U-287261, ES-U-284024, DE-U-8707552, GB-A-2231036 et EP-A-569747.

Selon un premier aspect, l'invention a donc pour but la réalisation d'une capsule service, en matière plastique, du type comprenant :
- une partie de base essentiellement rigide dans son ensemble, incluant une paroi latérale périphérique, une paroi transversale et ayant un orifice excentré ;
- une partie de fermeture et de manoeuvre de commande, essentiellement rigide dans son ensemble, agencée pour pouvoir être montée de façon mobile à pivotement sur la partie de base, dans un sens ou dans l'autre et ouvrir ou fermer, respectivement, la communication avec l'orifice ;
- des moyens d'association réciproque à pivotement sur la partie de fermeture et la partie de base ;
- et une partie intermédiaire multifonctionnelle placée entre la partie de base et la partie de fermeture et reliée à chacune d'elles par une liaison pouvant être arrachée, la capsule comprenant ainsi un système d'inviolabilité intégré ;

cette capsule ne présentant pas les inconvénients des capsules service connues de ce type.

Plus particulièrement, l'invention selon ce premier aspect a pour but qu'une telle capsule présente les caractéristiques avantageuses suivantes :
- l'orifice de la partie de base et la partie intermédiaire sont opposés ;
- les moyens d'association à pivotement sont écartés tant de l'orifice que de la partie intermédiaire et localisés de façon médiane, notamment centrale ;
- la partie de base, la partie de fermeture et les moyens d'association à pivotement sont agencés pour une course de pivotement limitée et une évacuation latérale du contenu ;
- la liaison pouvant être arrachée étant faible pour permettre l'arrachage mais suffisante pour résister aux contrainte limitées du montage.

La partie intermédiaire présente, hormis les liaisons amincies, une certaine tenue ou rigidité tout en pouvant être manipulée pour l'arrachage et la fracture du système d'inviolabilité.

La partie intermédiaire avec les liaisons amincies forme fonctionnellement - notamment constitue -, une fois la capsule montée, le système d'inviolabilité avant toute première ouverture.

Une liaison amincie est en une ou plusieurs parties ; est amincie en épaisseur et/ou en longueur ; sous la forme d'une ligne et/ou de pont ; est continue ou discontinue.

Une liaison amincie définit, un - ou au moins un - axe d'articulation, notamment au moins deux axes d'articulation parallèles, écartés mais proches l'un de l'autre, s'étendant parallèlement à l'axe de pivotement des moyens d'association réciproque.

Les deux liaisons amincies s'étendent le long de deux directions au moins sensiblement parallèles entre elles.

Les deux liaisons amincies sont frangibles lors de la première ouverture de la capsule, de manière à assurer une séparation totale du système d'inviolabilité des parties de la capsule.

La partie de base et la partie de fermeture sont ajustées l'une dans l'autre, l'une - telle que la partie de base - à l'extérieur, l'autre - telle que la partie de fermeture - à l'intérieur.

La capsule étant montée et en situation fermée, la face extérieure de la paroi transversale de la partie de fermeture est sensiblement coplanaire avec le bord libre annulaire d'extrémité correspondant de la partie de base.

La partie intermédiaire présente une certaine longueur entre la partie de base et la partie de fermeture, telle que, la partie de fermeture puisse être amenée, par le double pivotement relatif précédemment mentionné, d'une position dégagée non montée obtenue par l'injection à une position montée où elle coopère avec et sur la partie de base de même que coopèrent les moyens d'association, et ce, sans interférer inutilement lors du pivotement avec la partie de base. D'autre part, la partie intermédiaire forme une languette ou une bande déchirable appartenant au système d'inviolabilité.

Selon une réalisation, la languette ou bande du système d'inviolabilité est arrachable, pour la première ouverture de la capsule, à l'endroit d'une liaison amincie, cette languette ou bande étant détachée de l'une des deux parties de la capsule, tel que la partie intérieure et restant attachée à l'autre des deux parties de la capsule, tel que la partie extérieure.

Selon une autre réalisation, la languette ou bande est arrachable, à l'endroit des deux liaisons amincies, et étant alors totalement détachée de la capsule.

Dans un cas comme dans l'autre, l'arrachage peut résulter soit d'une manipulation spécifique d'arrachage portant directement sur le système d'inviolabilité, soit au moins pour partie de la manoeuvre de première ouverture, celle-ci ayant pour effet, simultanément, la fracture au moins partielle du système d'inviolabilité.

Selon une réalisation, la partie intermédiaire est reliée d'une part à la face extérieure de la paroi latérale périphérique de la partie de base, au voisinage de son bord libre annulaire où se trouve la partie de fermeture une fois montée et, d'autre part, sur la face extérieure du bord extérieur périphérique de la partie de fermeture.

Selon une variante de cette réalisation, la partie intermédiaire est reliée à la face extérieure de la paroi latérale périphérique de la partie de base, dans une zone formant une découpe en échancrure apte à permettre l'enfoncement, à cet endroit, par pivotement, par l'utilisateur, de la partie de fermeture en vue de l'ouverture de la capsule.

Selon une réalisation, la partie intermédiaire est reliée à la face extérieure du bord latéral périphérique de la partie de fermeture pourvue, par ailleurs, d'une paroi transversale.

La partie intermédiaire est sensiblement diamétralement opposée à l'orifice, lui-même excentré de manière à être sensiblement adjacent à la paroi latérale.

La partie intermédiaire est reliée à la partie de base ou à la partie de fermeture respectivement par au moins deux ponts frangibles écartés l'un de l'autre, le long de la direction de l'axe de pivotement formé par cette liaison amincie.

Les ponts frangibles ont une longueur, entre la partie intermédiaire et l'une, l'autre, respectivement, des deux autres parties de la capsule, telle que la capsule puisse à partir de sa situation d'injection être montée par le mouvement de double pivotement et, qui une fois la capsule montée, la partie intermédiaire soit contre sa périphérie, sans contrainte excessive appliquée aux ponts. Ceux-ci sont ainsi préservés et peuvent jouer pleinement leur rôle pour l'inviolabilité.

Selon une réalisation, l'une des deux liaisons amincies comporte des - notamment deux- ponts et l'autre liaison amincie comporte des ponts attenants à la partie correspondante de la capsule et, une ligne ou zone amincie proche des ou attenante aux ponts.

L'écartement entre la ligne définie par les ponts et la ligne ou zone amincie proche ou attenante est telle qu'elle permet, au moins en partie, de compenser le décalage entre les faces extérieures des deux parties de la capsule, celles-ci étant agencées l'une dans l'autre. Par exemple, cet écartement est de l'ordre de grandeur de l'épaisseur de la paroi de la partie de capsule située à l'extérieur.

A cet endroit, la partie intermédiaire peut former un angle ou être incurvée, l'ouverture de l'angle ou la concavité de l'incurvation étant tournée vers la capsule.

Selon une réalisation particulière, la capsule comporte deux ponts du côté de la partie de base et deux ponts et une ligne ou zone amincie du côté de la partie de fermeture.

L'écartement maximal entre les ponts compté le long de la direction de l'axe d'articulation est égal ou voisin de la largeur de la partie intermédiaire et est relativement faible, comparé à la dimension transversale à savoir le diamètre de la capsule. Cet écartement est par exemple de l'ordre d'une fraction de cette dimension.

La capsule comporte deux ponts du côté de la partie de base et deux ponts du côté de la partie de fermeture.

Selon une réalisation, la partie intermédiaire est prolongée, sur au moins un de ses deux bords, par une queue incurvée dont l'extrémité opposée est libre mais placée contre la périphérie de la capsule, notamment la paroi latérale de la partie extérieure telle que la partie de base. Cette queue fait partie du système d'inviolabilité et forme un moyen de saisie sur lequel l'utilisateur peut tirer pour fracturer le système d'inviolabilité. La longueur de la queue est suffisante pour la saisie, sans être excessive. Ainsi, après injection et avant montage de la capsule, l'extrémité libre de la queue ne dépasse pas ou ne dépasse pas substantiellement l'encombrement hors-tout de la capsule.

Au moins la queue - le cas échéant la partie intermédiaire attenante également- présente une rigidité telle qu'elle reste contre la périphérie de la capsule en l'absence de sollicitation extérieure mais qu'elle peut être incurvée lorsqu'elle est saisie par l'utilisateur pour fracturer le système d'inviolabilité.

Selon une réalisation, les moyens d'association réciproque positifs à pivotement en vue de l'ouverture et de la fermeture, respectivement, de la capsule comportent des reliefs ou surfaces complémentaires des deux parties principales de la capsule tels que des rotules concaves, convexes ou des tétons et des creux complémentaires. Il est prévu ainsi deux tétons sur le bord extérieur périphérique de la partie de fermeture et deux creux sur la face interne de la paroi latérale périphérique de la partie de base au voisinage de son bord libre annulaire.

Il est prévu en outre des moyens de blocage de fin de course de déplacement, tel qu'enfoncement à force, pour éviter que les moyens d'association ayant été engagés ne soient désengagés à cause d'une poursuite du déplacement d'engagement. Ces moyens de blocage de fin de course n'empêchent pas toutefois le pivotement d'ouverture ou de fermeture, respectivement, de la capsule.

De tels moyens de blocage de fin de course comportent, selon une réalisation, une ou plusieurs saillies incurvées sur la face interne de la paroi latérale périphérique de la partie de base et une ou plusieurs saillies incurvées, complémentaires, ménagées par le bord de la partie de fermeture.

La capsule comporte par ailleurs une cheminée attenante à l'orifice ménagé dans la paroi transversale de la partie de base, elle-même en position intermédiaire entre ses deux bords libres annulaires d'extrémité. Cette cheminée est dirigée vers la partie de fermeture. Elle comporte à son extrémité opposée à la paroi transversale un orifice de décharge apte à permettre l'évacuation ou expulsion radiale du contenu du conteneur auquel est associé la capsule.

Cet orifice de décharge est obturé, lorsque la capsule est en situation de fermeture, par la partie de fermeture ; la paroi transversale de la partie de fermeture et/ou la cheminée étant pourvue de moyens tels que saillie, creux, joint, lèvre, lèvre autojointante aptes à assurer une étanchéité suffisante de la fermeture.

La paroi transversale de la partie de fermeture et de manoeuvre de commande et la cheminée sont pourvues de moyens de confinement complémentaires tels que saillie, creux, joint, lèvre, coopérant lorsque la capsule est en situation d'ouverture et aptes à confiner et guider le contenu à évacuer entre l'orifice de décharge de la cheminée et l'orifice final d'évacuation du dit contenu dont est pourvue la capsule, de manière à assurer une évacuation ou expulsion radiale.

Cet orifice d'évacuation est, selon les variantes, ménagé sur le bord extérieur périphérique de la partie de fermeture, échancré ou percé à cet effet ; et/ou sur la paroi latérale périphérique de la partie de base échancrée ou percée à cet effet.

Selon une réalisation, les moyens d'association réciproque sont agencés pour que, la capsule étant de type pivotant, en situation d'ouverture, la première moitié de la partie de fermeture située vers l'orifice soit située à l'extérieur tandis que la seconde moitié de la partie de fermeture soit située à l'intérieur.

La course de pivotement de la partie de fermeture entre la situation d'ouverture et la situation de fermeture est limitée pour être nettement inférieure à 90°, de l'ordre de 10° à 30° environ ; l'intérieur de la capsule restant invisible même en situation d'ouverture.

La capsule présente un contour circulaire.

La capsule selon l'invention est monomatière ou multimatière, notamment bimatière.

La partie de base comporte, dans la réalisation où elle est injectée seule - sans conteneur associé -, des moyens d'association rigide avec un conteneur tel qu'un tube ou flacon, notamment de type inviolable, ainsi que des moyens tel que saillie, creux, collerette, joint, assurant le jointage d'étanchéité entre la capsule et le col du conteneur.

Selon une autre réalisation, la capsule est venue de fabrication avec un conteneur tel qu'un tube ou flacon et forme un ensemble unitaire avec lui. Le tube ou flacon prolonge la paroi latérale périphérique de la partie de base de la capsule à l'opposé de la partie de fermeture.

Selon un deuxième aspect, l'invention concerne un procédé dans lequel on injecte de la matière plastique dans un moule en vue de réaliser une capsule de fermeture d'un conteneur, en matière plastique, en une seule pièce, du type décrit ci-dessus dans lequel la partie intermédiaire avec les liaisons amincies forme fonctionnellement, lors de l'injection, un passage continu pour la matière plastique injectée ; et une fois la capsule injectée mais avant montage, une charnière de guidage à double effet à usage unique pour l'opération de montage, d'une part entre la partie de base et la partie intermédiaire, d'autre part entre la partie intermédiaire et la partie de fermeture, en vue du montage réciproque des deux parties de la capsule, respectivement des moyens d'association réciproque à pivotement.

On entend dans le texte par "les deux parties de la capsule", la partie de base et la partie de fermeture.

Pendant l'injection et à l'issue d'elle, la partie de fermeture est au moins sensiblement dans le prolongement - notamment sensiblement coplanaire - de la partie intermédiaire, toutes deux étant alors situées à côté de la partie de base - notamment sensiblement perpendiculairement à son axe principal -.

Selon d'autres réalisations, la partie intermédiaire reste attachée à l'une des deux parties de la capsule, à savoir à la partie de base, l'une seulement des deux liaisons amincies étant frangible, l'autre ne l'étant pas. Eventuellement la partie intermédiaire reste attachée à la partie de fermeture tout en étant détachée de la partie de base.

L'injection est réalisée à partir d'un seul ou de plusieurs - notamment deux- points d'injection écartés les uns des autres. Ainsi, selon les cas, on réalise l'injection depuis la partie de la base et/ou la partie de fermeture et/ou, éventuellement, la partie intermédiaire.

Une liaison amincie est donc apte à permettre le passage ou la répartition convenable de la matière plastique, lors de l'injection, vers et/ou depuis la partie intermédiaire.

Selon les réalisations envisagées, on injecte une matière plastique unique, la capsule étant monomatière ; ou une pluralité de matières plastiques, la capsule étant multimatière, notamment bimatière.

Selon les réalisations envisagées, on réalise par injection la capsule seule, ou un ensemble comprenant la capsule et un conteneur, tel qu'un tube ou flacon, lequel prolonge la paroi latérale périphérique de la partie de base de la capsule.

Selon les réalisations envisagées, on injecte le conteneur de manière que la partie extrême opposée à la capsule soit ouverte.

Après injection et extraction partielle de la capsule précédemment réalisée par injection, on assure un déplacement relatif à double pivotement de la partie de fermeture par rapport à la partie de base, grâce à la partie intermédiaire avec les deux liaisons amincies, afin d'amener la partie de fermeture à coopérer avec et sur la partie de base, de même que les moyens d'association réciproque à pivotement qu'elles comportent.

A la fin du déplacement relatif d'association des deux parties de la capsule on fait coopérer les moyens d'association réciproque à pivotement de la partie de base et de la partie de fermeture à la fin du déplacement relatif d'association de ces deux parties, par déplacement tel qu'enfoncement à force de manière que les moyens ainsi associés positivement ne soient pas normalement aisément dissociables.

On amène la partie de fermeture à coopérer avec et sur la partie de base par pivotement relatif de la partie de fermeture par rapport à la partie intermédiaire et de la partie intermédiaire par rapport à la partie de base, de manière que la partie de fermeture soit placée directement en situation de fermeture, sans passer par l'intermédiaire d'une situation où elle est montée ouverte.

Lorsqu'on déplace relativement la partie de fermeture par rapport à la partie de base, on amène la partie intermédiaire à être contre la périphérie de la partie de base et/ou de la partie de fermeture. On constitue et on met ainsi en place le système d'inviolabilité.

Pour assurer le déplacement relatif de la partie de fermeture et par rapport à la partie de base, on maintient fixe l'une des deux parties - tel que la partie de base - celle-ci étant placée dans l'une des parties du moule d'injection préalablement ouvert et on déplace à pivotement l'autre partie- tel que la partie de -.

D'autres modalités du déplacement relatif peuvent être envisagées.

Selon une caractéristique avantageuse, on assure le déplacement relatif de la partie de fermeture par rapport à la partie de base et le montage réciproque corrélatif des deux parties sur le site même d'injection - le moule -, sans transfert substantiel de la capsule dans son ensemble.

En particulier, on assure le déplacement relatif de montage des deux parties de la capsule immédiatement ou peu de temps après l'injection.

Selon une autre réalisation, on monte la capsule en dehors du site même de sa réalisation - à savoir le moule - . La capsule est alors reprise, après injection, en vue de son montage. Cette reprise est facilitée parce que la capsule comporte non seulement une queue faisant partie du système d'inviolabilité mais aussi entre les deux parties principales, une partie intermédiaire. Cette queue, cette partie intermédiaire permettent de maintenir une orientation convenable aux deux parties principales de la capsule.

Selon une variante, on injecte la capsule seule, sans conteneur, ce dernier étant injecté par ailleurs. La capsule ayant été montée et se trouvant ainsi en situation de fermeture, on l'associe à un conteneur, tel qu'un tube ou flacon, notamment de façon inviolable tel qu'enfoncement à force, soudage, vissage approprié. L'ensemble capsule-conteneur est alors inviolable, la capsule l'étant elle-même par ailleurs.

Soit le conteneur utilisé est initialement fermé à sa partie extrême opposée à la capsule et on remplit le conteneur avec le contenu avant que d'associer la capsule et le conteneur ; soit le conteneur utilisé est initialement ouvert à sa partie extrême opposée à la capsule, on associe ensuite le conteneur et la capsule, puis on remplit le conteneur par sa partie extrême restée ouverte, puis on ferme cette partie extrême notamment par pincement et soudage.

Selon une autre variante, on injecte un ensemble capsule et conteneur. La capsule ayant été montée et se trouvant ainsi en situation de fermeture, on associe le conteneur et la capsule, on remplit le conteneur par sa partie extrême opposée à la capsule et restée ouverte, puis on ferme cette partie extrême notamment par pincement et soudage.

Selon un troisième aspect, l'invention concerne un dispositif pour la mise en oeuvre du procédé qui vient d'être décrit. Ce dispositif comprend un moule d'injection à au moins une empreinte - et généralement une pluralité d'empreintes -. Ce moule comporte plusieurs pièces spécialement conformées pour permettre de mouler au moins une capsule en une seule pièce, des moyens d'injection et des moyens d'extraction, la capsule étant ainsi qu'il a été décrit précédemment.

Pour chaque empreinte il est prévu selon les cas soit un, soit plusieurs points d'injection, notamment deux.

Selon les réalisations envisagées pour la capsule, le moule est de type sans tiroir ou de type à un ou plusieurs tiroirs.

Pour chaque empreinte il est prévu au moins deux pièces réciproques destinées à la réalisation par injection de la partie intermédiaire de la capsule avec les liaisons amincies. Ces pièces, ou au moins une d'entre elles, peuvent être l'une des autres pièces constitutives du moule.

Selon la réalisation, chaque empreinte du moule est conformée pour le moulage par injection de la seule capsule, ou d'un ensemble capsule-conteneur.

Le dispositif comprend en outre des moyens de déplacement relatif à double pivotement de la partie de fermeture par rapport à la partie de base associés ou intégrés au moule et montés mobiles dans leur ensemble entre une position distale escamotée et une position proximale d'interférence, grâce à des moyens d'entraînement couplés en commande avec ceux du moule

Dans la réalisation envisagée, ces moyens de déplacement relatif comportent un organe pousseur monté à pivotement par rapport à un support et des moyens d'entraînement à pivotement du dit organe pousseur par rapport au support.

Toutefois, selon une autre réalisation, les moyens de déplacement appropriés permettant le montage de la capsule sont dissociés du moule, la capsule étant reprise après moulage pour son montage.

L'invention sera bien comprise grâce à la description qui suivra en référence aux dessins annexés, illustrant divers modes de réalisation.

La figure 1 est une vue en perspective, de dessus et d'arrière, à plus grande échelle d'une première variante de capsule après injection et avant montage.

La figure 2 est une vue en perspective de la capsule de la figure 1 après montage, mais avant première ouverture, le système d'inviolabilité, bien visible, n'étant pas fracturé.

La figure 3 est une vue similaire à la figure 2, le système d'inviolabilité ayant été fracturé et totalement enlevé, la capsule pouvant alors être ouverte.

La figure 4 est une vue similaire à la figure 3 dans laquelle le système d'inviolabilité ayant été préalablement fracturé et totalement enlevé, la capsule est en situation d'ouverture.

La figure 5 est une vue en élévation de la capsule de la figure 1 selon la flèche F de la figure 1.

La figure 6 est une vue en élévation de la capsule de la figure 1 selon la flèche G de la figure 1.

La figure 7 est une vue de dessus de la capsule de la figure 1.

La figure 8 est une vue en coupe de la capsule selon la première variante, selon la ligne VIII-VIII de la figure 7.

La figure 9 est une vue similaire à la figure 8 montrant la capsule dans une situation intermédiaire entre l'extraction après injection et le montage de ses deux parties.

La figure 10 est une vue similaire à celle des figures 8 et 9, montrant la capsule une fois montée, fermée, avant toute ouverture.

La figure 11 est une vue de dessus de la capsule montée selon la figure 10.

La figure 12 est une vue similaire à la figure 10, illustrant une première étape de fracture du système d'inviolabilité de la capsule, résultant de la manoeuvre de première ouverture de la capsule, la languette ou bande du système d'inviolabilité restant attachée à la partie de base de la capsule.

La figure 13 est une vue similaire à la figure 12 illustrant une deuxième étape de fracture et d'enlèvement du système d'inviolabilité, la languette ou bande du système d'inviolabilité étant alors totalement détachée de la capsule.

La figure 14 est une vue similaire à la figure 1 illustrant une deuxième variante de réalisation de capsule après injection et avant montage, la cheminée de la capsule ayant une section transversale oblongue et non circulaire comme dans le cas de la figure 1.

La figure 15 est une vue de dessus de la capsule de la figure 14.

La figure 16 est une vue en coupe de la capsule selon la deuxième variante, selon la ligne XVI-XVI de la figure 15.

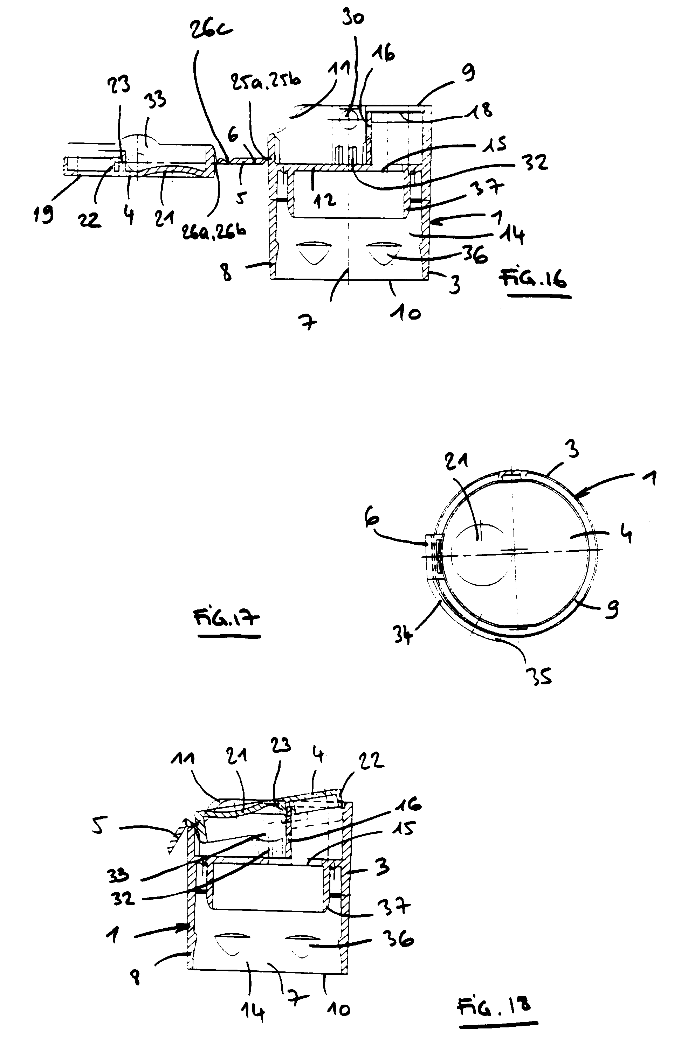

La figure 17 est une vue de dessus de la capsule montée selon la deuxième variante de réalisation.

La figure 18 est une vue illustrant une première étape de fracture du système d'inviolabilité de la capsule, selon la deuxième variante, résultant de la manoeuvre de première ouverture de la capsule, la languette ou la bande du système d'inviolabilité restant attachée à la partie de fermeture ; cette bande étant totalement enlevée dans une seconde étape.

La figure 19 est une vue similaire aux figures 1 et 14 illustrant une troisième variante de réalisation de capsule après injection et avant montage, la cheminée étant plus courte et en retrait par rapport au bord annulaire.

La figure 20 est une vue en élévation de la capsule de la figure 19 selon la flèche H.

La figure 21 est une vue de dessus de la capsule de la figure 19.

La figure 22 est une vue en coupe de la capsule selon la troisième variante, selon la ligne XXII-XXII de la figure 21.

La figure 23 est une vue similaire aux figures 1, 14, 19 illustrant une quatrième variante de réalisation de capsule après injection et avant montage, l'orifice de décharge de la cheminée étant également radial contrairement aux précédentes variantes.

La figure 24 est une vue en perspective de la capsule de la figure 23 après montage, mais avant première ouverture.

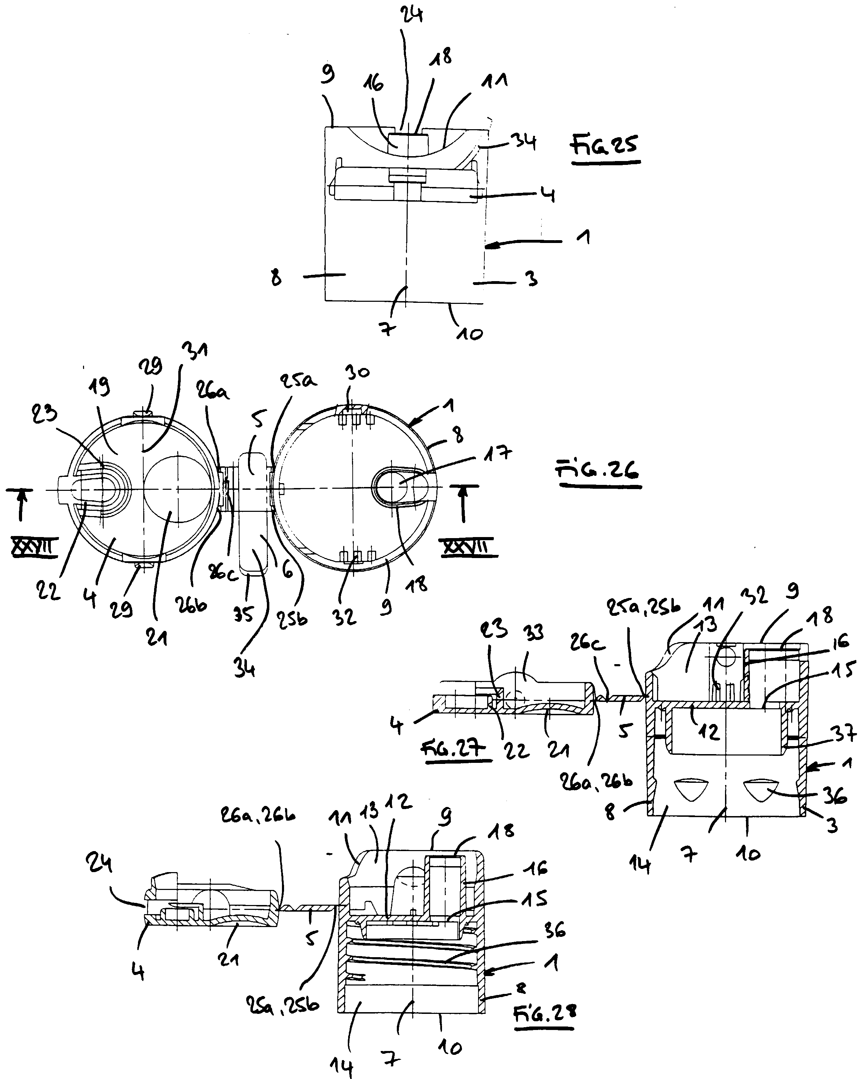

La figure 25 est une vue en élévation de la capsule de la figure 23, selon la flèche J de la figure 23.

La figure 26 est une vue de dessus de la capsule de la figure 23.

La figure 27 est une vue en coupe de la capsule selon la quatrième variante, selon la ligne XXVII-XXVII de la figure 26.

La figure 28 est une vue en coupe similaire à la figure 27 d'une cinquième variante de réalisation de capsule comportant des moyens d'association du conteneur par vissage.

La figure 29 est une vue en élévation similaire à la figure 5 d'une sixième variante de réalisation de capsule incorporée à un conteneur en forme de tube.

La figure 30 est une vue en élévation similaire à la figure 6, partielle, de la capsule et du conteneur selon la sixième variante de réalisation.

La figure 31 est une vue en coupe similaire à la figure 8, partielle, de la capsule et du conteneur selon la sixième variante de réalisation.

La figure 32 est une vue illustrant la fracture totale du système d'inviolabilité de la capsule, résultant de la manoeuvre de première ouverture de celle-ci.

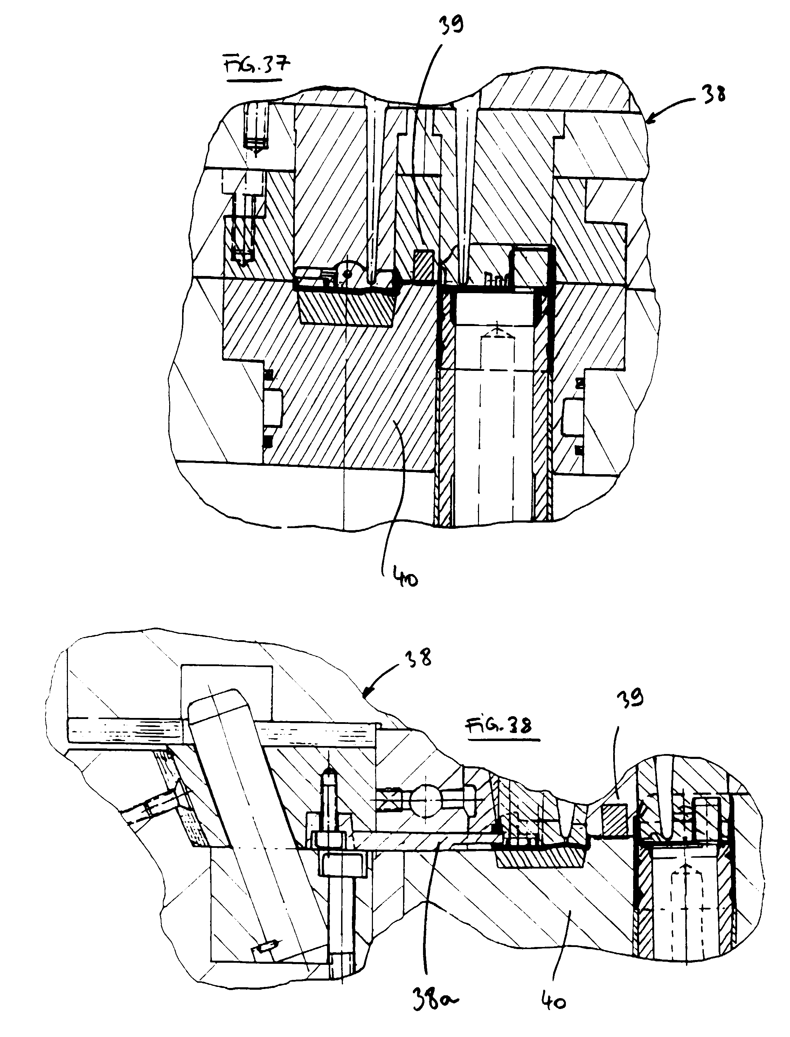

La figure 33 est une vue en élévation frontale d'une capsule selon une septième variante de réalisation comportant un orifice de décharge latéral ménagé dans la partie de base ; cette figure est une vue selon la flèche K de la figure 34.

La figure 34 est une vue en coupe similaire à la figure 10 de la capsule selon la septième variante, montrant la capsule une fois montée, avant toute ouverture.

La figure 35 est une vue similaire à la figure 34, illustrant la capsule suite à une manipulation spécifique d'arrachage portant directement sur le système d'inviolabilité, la languette ou bande étant alors totalement détachée de la capsule.

La figure 36 est une vue similaire à la figure 35 illustrant la capsule en situation d'ouverture.

La figure 37 est une vue partielle en coupe axiale d'un moule d'injection d'une capsule du type de celle selon les premières variantes considérées.

La figure 38 est une vue partielle en coupe axiale d'une autre réalisation d'un moule d'injection à tiroir pour une capsule du type de celle selon la troisième variante.

La figure 39 est une figure schématique en perspective d'une réalisation possible de moyens de montage de la capsule par double pivotement relatif de la partie de fermeture et de manoeuvre de commande par rapport à la partie de base.

Une capsule 1 conforme à l'invention est destinée à la fermeture d'un conteneur 2 lui-même destiné, notamment mais non exclusivement, à un produit liquide ou pâteux à usage alimentaire, cosmétique, ou d'entretien.

Ce produit est appelé "contenu".

Selon les réalisations envisagées, la capsule 1 et le conteneur 2 sont deux pièces séparées l'une de l'autre mais assemblées ensemble ou, au contraire, forment une seule et même pièce venue d'ensemble de fabrication.

Dans ce dernier cas, le conteneur 2 comporte à une partie extrême, une partie formant fonctionnellement la capsule, tandis que l'autre partie extrême est destinée finalement à être fermée.

La capsule 1 en tant que telle peut être largement décrite sans se préoccuper que la réalisation effective est la première ou la seconde précédemment envisagée (sans ou avec conteneur).

La capsule 1 est réalisée en matière plastique par injection. Cette matière plastique est choisie de manière que la capsule, dans son ensemble, présente une certaine rigidité. Il s'agit, par exemple, de polypropylène. Toutefois, le choix de la matière plastique peut être plus large.

La capsule 1 est injectée en une seule pièce, de façon monobloc.

Elle comporte une partie de base 3, une partie de fermeture et de manoeuvre de commande 4, toutes deux essentiellement rigides dans leur ensemble, ainsi qu'une partie intermédiaire multifonctionnelle 5.

La capsule 1 comporte, en outre, un système d'inviolabilité 6.

Ce système 6, lorsqu'il n'est pas fracturé, indique et apporte la garantie que la capsule 1 n'a pas été ouverte.

Lorsque le système 6 a été fracturé, respectivement enlevé, la capsule 1 peut être ouverte et fermée à volonté.

Dans la réalisation considérée, la capsule 1 montée présente une forme générale cylindrique et comporte un axe principal de révolution 7.

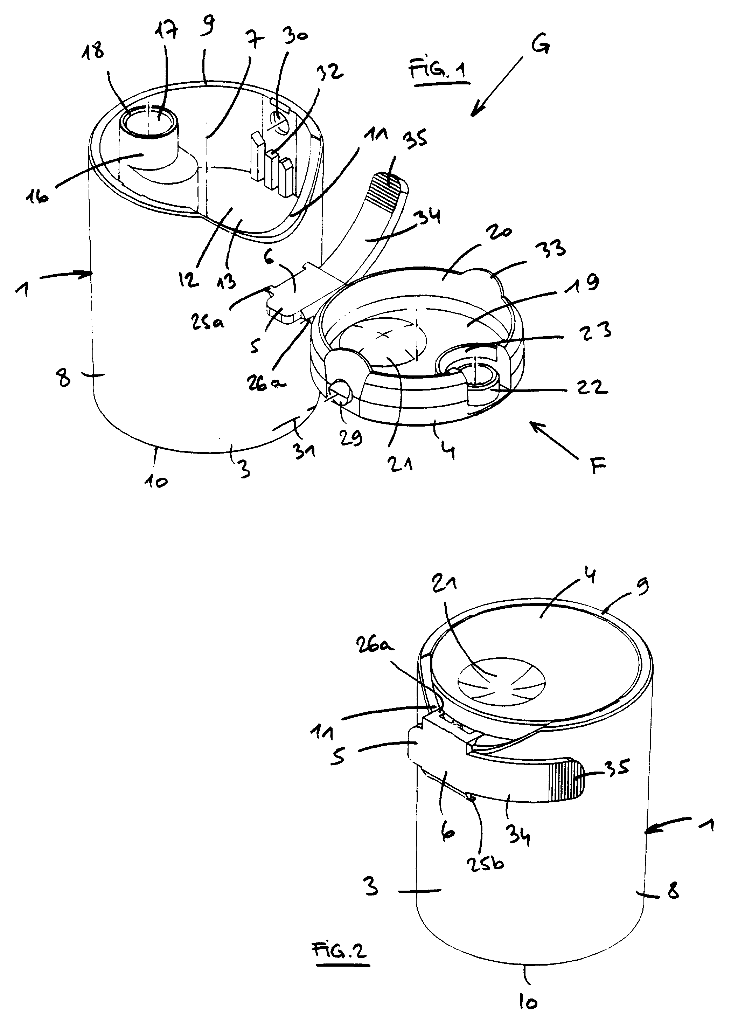

On entend par "capsule 1 montée", le fait que ses deux parties 3 et 4 sont associées l'une avec et dans l'autre, par opposition à la situation où elles sont juxtaposées, ainsi qu'il est représenté en figure 1.

Dans d'autres réalisations, la capsule 1 présente un axe principal 7 mais sa forme n'est pas de révolution ou est prismatique ou autre.

Dans la position d'utilisation ultérieure normale, l'axe 7 est généralement vertical. Cette position n'est pas nécessairement décisive. Il en est de même de la position supérieure (ou inférieure) de la capsule 1 par rapport au conteneur 2.

La capsule 1 considérée peut se trouver dans différents états :
- injectée mais non encore montée (figure 1) ;
- montée et pourvue du système d'inviolabilité 6 en situation opératoire, non fracturé avant première ouverture (figure 2) ;
- avec le système d'inviolabilité 6 fracturé.

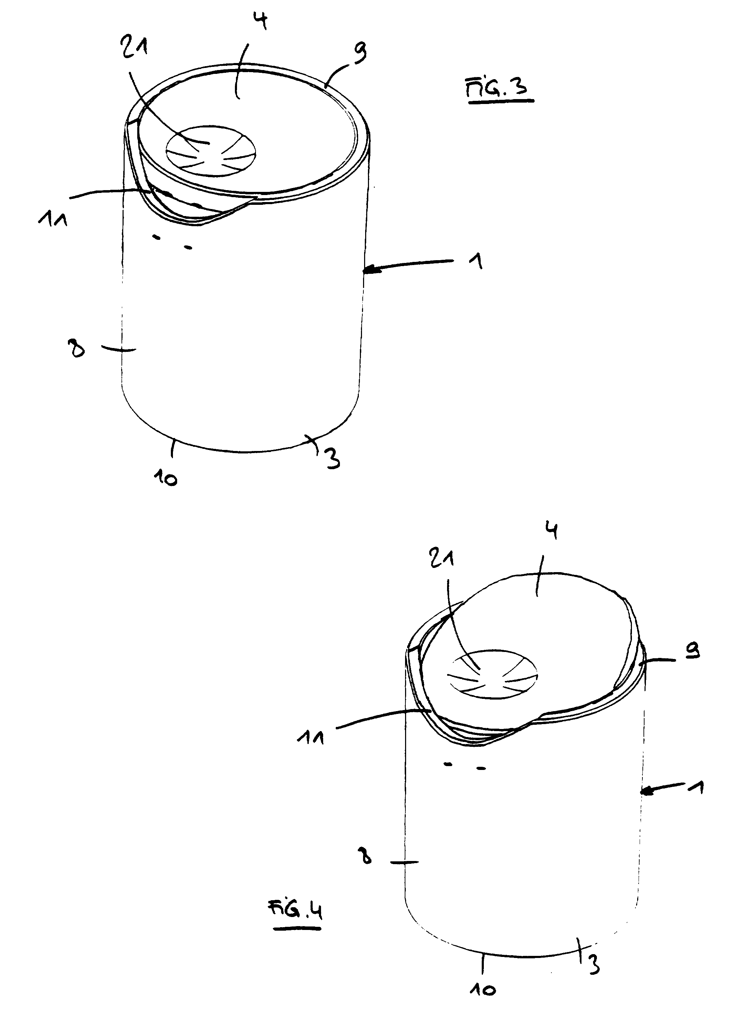

Dans ce dernier cas, la capsule 1 peut être :
- soit en situation de fermeture (figure 3)
- soit en situation d'ouverture (figure 4).

Une capsule 1 telle que celle qui est considérée ici a, selon une réalisation typique, une dimension axiale et radiale de l'ordre du ou de quelques centimètres. Toutefois, l'invention n'est pas limitée à de telles tailles.

La partie de base 3 comporte et est limitée par une paroi latérale périphérique 8 ayant deux bords annulaires d'extrémité à savoir le bord 9 vers la partie 4 et le bord 10, à l'opposé.

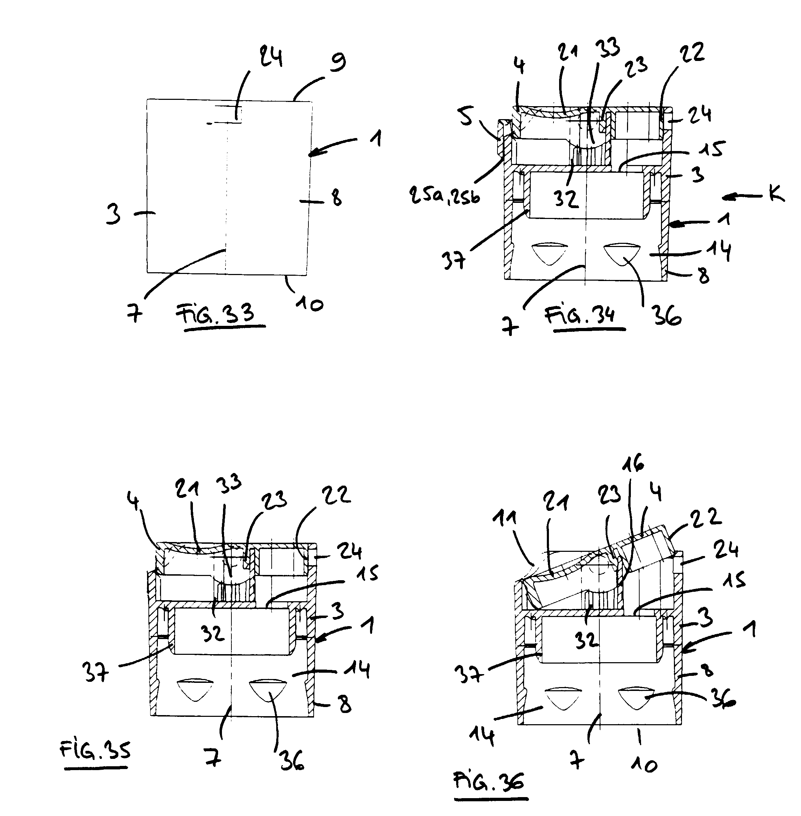

Dans le cas d'une capsule 1 seule les deux bords 9 et 10 sont peu éloignés. Dans le cas d'un ensemble monobloc capsule 1/conteneur 2, la paroi 8 est plus longue et forme la paroi même du conteneur 2. Le bord 10 est alors le bord libre ouvert du conteneur 2 opposé à la capsule 1. Dans ce cas, il est prévu dans la réalisation de la figure 31 que la paroi du tube formant le conteneur 2 est plus mince que celle de la paroi 8, de manière à pouvoir être déformée par pression.

Toutefois, d'autres réalisations peuvent être envisagées.

Dans les réalisations représentées, le bord 9 présente en un endroit de sa périphérie une découpe en échancrure 11, arrondie et évasée.

La partie de base 3 comporte également une paroi transversale 12, qui, dans les réalisations considérées est plane et perpendiculaire à l'axe 7. La paroi 12 est placée en position intermédiaire entre les deux bords annulaires 9 et 10.

En conséquence, la paroi 12 définit dans la partie 3 deux compartiments 13 et 14 respectivement d'un côté et de l'autre de la paroi 12.

La paroi transversale 12, pleine par ailleurs est pourvue d'un orifice 15.

La partie de base 3 comporte également une cheminée creuse 16 entourant et notamment attenante à l'orifice 15, de direction générale rectiligne et axiale, située dans le compartiment 13, dirigée vers le bord annulaire 9.

A son extrémité libre opposée à la paroi 12, la cheminée 16 comporte un orifice de décharge 17.

Dans les réalisations considérées, la cheminée 16 est décentrée par rapport à l'axe 7 et adjacente ou proche de la paroi 8, en tout cas diamétralement à l'opposé de la découpe 11.

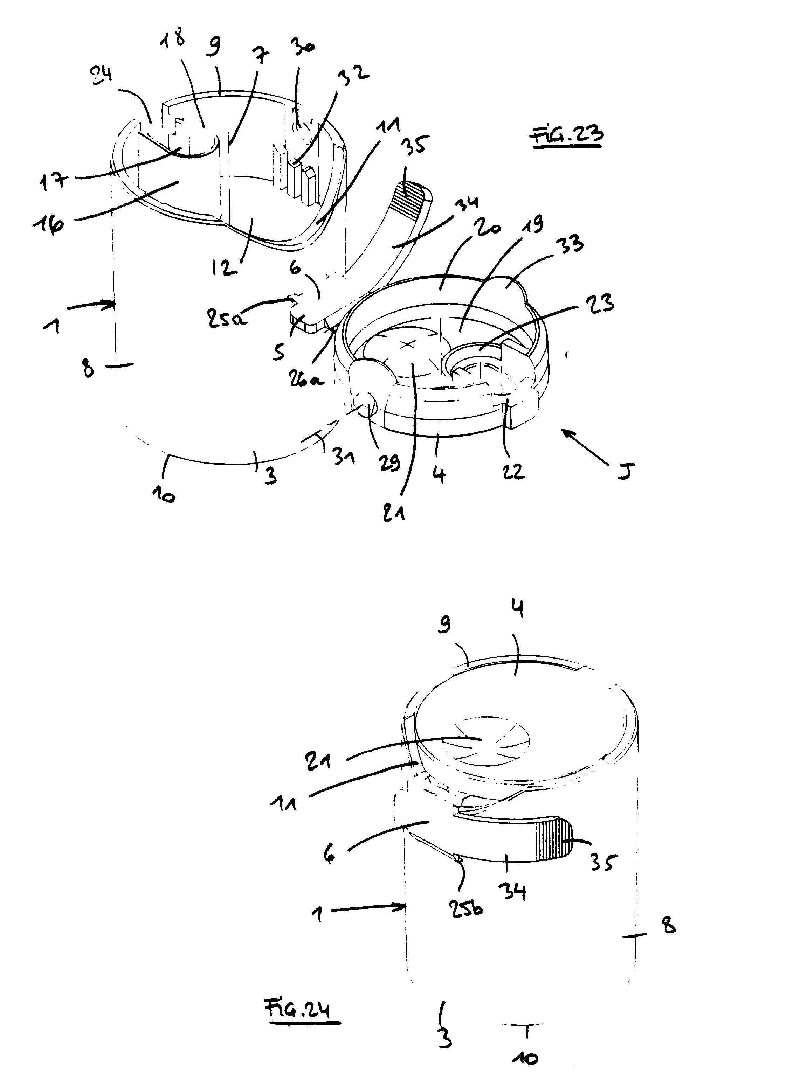

Selon les réalisations représentées, l'orifice de décharge 17 est axial (par exemple figure 1) et également radial vers l'extérieur de la capsule 1, c'est à dire vers la paroi 8 proche, donc à l'opposé de l'échancrure 11 (par exemple figure 23).

Selon la réalisation, le bord libre 18 de la cheminée 16 définissant notamment l'orifice 17 est sensiblement coplanaire avec le bord 9 (figure 1) ou écarté, légèrement en retrait dans le compartiment 13 (figure 19) tout en pouvant être obturée, ainsi que cela est décrit.

Selon les réalisations, la cheminée 16 a en section droite transversale un contour circulaire (figure 1) ou oblong (figure 14), le grand diamètre étant en l'occurrence diamétral d'axe 7.

La cheminée 16 peut, naturellement, faire l'objet d'autres variantes de réalisation de forme.

La partie 4 comporte une paroi transversale 19, pleine, de forme générale circulaire et, à sa périphérie, un bord latéral périphérique 20, tombé, perpendiculaire à la paroi 19 et de faible longueur axiale.

La paroi 19 sert non seulement à obturer la communication avec l'orifice 15 mais également à permettre la manoeuvre de pivotement d'ouverture, fermeture, respectivement, de la capsule 1.

A cet effet, la paroi 19 comporte sur sa face externe, dans les réalisations représentées, un enfoncement 21 marquant l'emplacement du pouce de l'utilisateur pour l'appui de la manoeuvre d'ouverture de la capsule.

Cet enfoncement 21 est situé à l'écart de la cheminée 16 lorsque la capsule 1 est montée, c'est à dire à proximité de la partie intermédiaire 5.

La paroi 19 comporte des moyens 22 tels que saillie, creux, joint, lèvre, lèvre autojointante, aptes à assurer en association avec la cheminée, notamment son bord attenant à l'orifice 17, une étanchéité suffisante de la fermeture de l'orifice de décharge 17 lorsque la capsule 1 est en situation de fermeture.

L'orifice 17 ou la communication avec lui est en effet obturé par la partie 4 lorsque la capsule 1 est en situation de fermeture.

Dans une réalisation typique, les moyens 22 sont une saillie en forme de collerette de petite hauteur axiale pénétrant avec ajustement doux dans l'orifice 17 de la cheminée 16 lorsque la partie 4 est en situation de fermeture. Dans une autre réalisation, ces moyens 22 pourraient être une lèvre déformable à la périphérie de l'orifice 17 venant se plaquer, en situation de fermeture contre la face interne à la paroi 19.

D'autre part, il est également prévu, sur la paroi 4 et la cheminée 16 des moyens de confinement 23 complémentaires tels que saillie, creux, joint, lèvre, coopérant lorsque la capsule 1 est en situation d'ouverture. Ces moyens 23 sont aptes à confiner le contenu à évacuer entre l'orifice de décharge 17 et un orifice final d'évacuation 24 dudit contenu, prévu sur la capsule 1.

Dans une réalisation typique, ces moyens 23 se présentent sous la forme d'un secteur cylindrique entourant la collerette des moyens 22. Ce secteur 23 est de plus grande hauteur axiale que la collerette 22.

Grâce à la présence des moyens 23, le contenu à évacuer reste confiné dans un passage allant de l'amont à l'orifice 15 à l'aval à l'orifice 24 en passant par la cheminée 16 et l'orifice 17.

La partie intermédiaire 5 est multifonctionnelle, à la fois pour l'injection en une seule pièce de la capsule, l'opération de montage réciproque des deux parties 3 et 4 par double pivotement et l'inviolabilité réalisée par le système 6.

La partie intermédiaire 5 présente une certaine longueur comptée entre les deux parties 3 et 4 entre laquelle elle est placée et qu'elle relie par deux liaisons amincies respectivement 25, 26.

Hormis les liaisons amincies, 25, 26, la partie 5 présente une certaine tenue ou rigidité. On entend par-là que la partie intermédiaire 5 n'est pas molle ou déformable en l'absence de contraintes extérieures.

Dans les réalisations représentées, les deux liaisons 25, 26 sont frangibles. Le système d'inviolabilité 6 fracturé lorsque cela est souhaité est alors totalement dissocié des deux parties 3 et 4.

Les deux liaisons 25, 26 s'étendent le long de (respectivement définissent) deux lignes 27, 28, respectivement, parallèles entre elles ou sensiblement parallèles entre elles.

Les lignes 27, 28 sont orthogonales à l'axe 7 et, dans les réalisations représentées parallèles à la paroi 19.

Les deux lignes 27, 28 ou liaisons 25, 26 sont écartées transversalement l'une de l'autre, la partie 5 ayant, comme indiqué, une certaine longueur entre les parties 3 et 4. Cet écartement permet non seulement le montage de la partie 4 sur la partie 3 mais aussi la réalisation du système d'inviolabilité 6.

La partie 5 avec les deux liaisons 25, 26 forme fonctionnellement, une fois la capsule injectée mais avant son montage, une charnière de guidage à double effet à usage unique pour l'opération de montage. Cette charnière 25, 26 est située d'une part entre la partie de base 3 et la partie intermédiaire 5 et d'autre part entre la partie intermédiaire 5 et la partie de fermeture et de manoeuvre de commande 4. Elle permet le montage réciproque des deux parties 3 et 4 de la capsule 1 ainsi que celui des moyens d'association réciproque à pivotement qu'elles comportent.

On entend ici par usage unique de montage, le fait que la charnière ne sert qu'une seule fois, pour le montage réciproque des deux parties 3 et 4.

D'autre part, la partie intermédiaire 5 avec les liaisons amincies 25, 26 forme fonctionnellement, une fois la capsule 1 montée, le système d'inviolabilité 6.

Enfin, la partie intermédiaire 5 avec les liaisons amincies 25, 26 forme fonctionnellement, lors de l'injection, un passage continu pour la matière plastique injectée.

Une liaison amincie 25, 26 peut faire l'objet de diverses formes de réalisations. D'une façon générale elle peut être en une ou plusieurs parties ; être amincie en épaisseur et/ou en longueur ; être sous forme de ligne et/ou de pont ; être continue ou discontinue.

Selon les réalisations représentées, la partie intermédiaire 5 est reliée d'une part à la partie de base 3, d'autre part à la partie de fermeture et de manoeuvre de commande 4 par deux ponts frangibles écartés l'un de l'autre respectivement 25a, 25b, 26a, 26b.

Plus précisément, la partie intermédiaire 5 est reliée d'une part à la face extérieure de la paroi 8 de la partie 3 au voisinage du bord 9 et, d'autre part, sur la face extérieure du bord extérieur périphérique 20 de la partie 4.

La partie 5 est reliée à la partie de base 3, dans la zone formant découpe en échancrure 11. Cette découpe 11 est apte à permettre l'enfoncement par un doigt de l'utilisateur, à cet endroit, et par pivotement, de la partie 4 en vue de l'ouverture de la capsule.

La longueur des ponts 25a, 25b, 26a, 26b entre la partie intermédiaire 5 et l'une ou l'autre des deux autres parties 3, 4 de la capsule 1, est telle que la capsule 1 puisse être montée et, qu'une fois montée, la partie intermédiaire 5 soit placée contre ou au voisinage de sa périphérie. En l'occurrence, la partie intermédiaire 5 est placée contre la paroi 8 et dans une certaine mesure contre le bord 20. Toutefois, aucune contrainte excessive n'est appliquée aux ponts pour éviter toute rupture intempestive.

Une liaison amincie - en l'occurrence la liaison 25 avec la partie 3 - ne comporte que deux ponts 25a, 25b.

L'autre liaison amincie - en l'occurrence la liaison 26 avec la partie 4 - comporte deux ponts 26a, 26b, attenants à la partie 4 et, au voisinage de ceux-ci une ligne amincie 26c légèrement plus éloignée de la partie 4. La liaison amincie 26 définit alors deux axes d'articulation parallèles, 28a, 28b, écartés mais proches l'un de l'autre.

Cet écartement est tel qu'il permet, au moins en partie, de compenser le décalage entre les faces extérieures des deux parois 8, 20 des deux parties 3, 4 de la capsule 1 agencées l'une dans l'autre une fois la capsule 1 montée. Cet écartement est dans ce cas de l'ordre de grandeur de l'épaisseur de la paroi de la partie de la capsule située à l'extérieur de la capsule. Il s'agit, dans les réalisations représentées, de la paroi 8.

La combinaison des ponts 26a, 26b et de la ligne amincie 26c permet à cet endroit à la partie intermédiaire 5 que celle-ci puisse former un angle, l'ouverture de l'angle étant tournée vers les parties 3, 4 en situation de fermeture.

Au lieu d'une ligne amincie 26c, en biseau, on peut prévoir une zone amincie. Celle-ci est alors incurvée, à concavité tournée vers la capsule.

L'écartement entre deux ponts 25a, 25b ou 26a, 26b comptée le long des lignes 27 ou 28 ce qui correspond à la largeur de la partie 5- est relativement faible, comparé à la dimension transversale de la capsule 1.

Par exemple, pour une capsule ayant un diamètre de l'ordre de 3 cm, les ponts 25a, 25b, 26a, 26b peuvent être écartés de l'ordre de quelques millimètres ou en tout cas nettement moins du centimètre.

En effet, les liaisons amincies 25, 26 servent, en tant que charnière à double effet, à usage unique.

Dans la réalisation où les deux liaisons amincies 25, 26 sont toutes deux frangibles en totalité, la partie intermédiaire 5 formant le système d'inviolabilité 6 est totalement dissociée de la capsule 1, après fracture du système.

Cette réalisation peut faire l'objet de plusieurs variantes s'agissant du procédé de fracture et d'enlèvement du système d'inviolabilité.

Selon une autre réalisation, l'une des liaisons - en l'occurrence la liaison 25 attenante à la paroi extérieure 8 de la capsule 1- n'est pas frangible alors que l'autre liaison 26 est frangible.

Dans ce cas, la partie 5, une fois le système 6 fracturé, reste attenante à la capsule 1, sur la base 3, sans empêcher l'ouverture et la fermeture de la partie 4. Cette réalisation est rendue ici possible étant donné la petite taille de la partie 5 relativement aux parties 3 et 4.

Cette réalisation peut faire l'objet d'une autre variante dans laquelle la partie 5 reste attenante à la partie 4 - et non à la partie 3- une fois le système 6 fracturé.

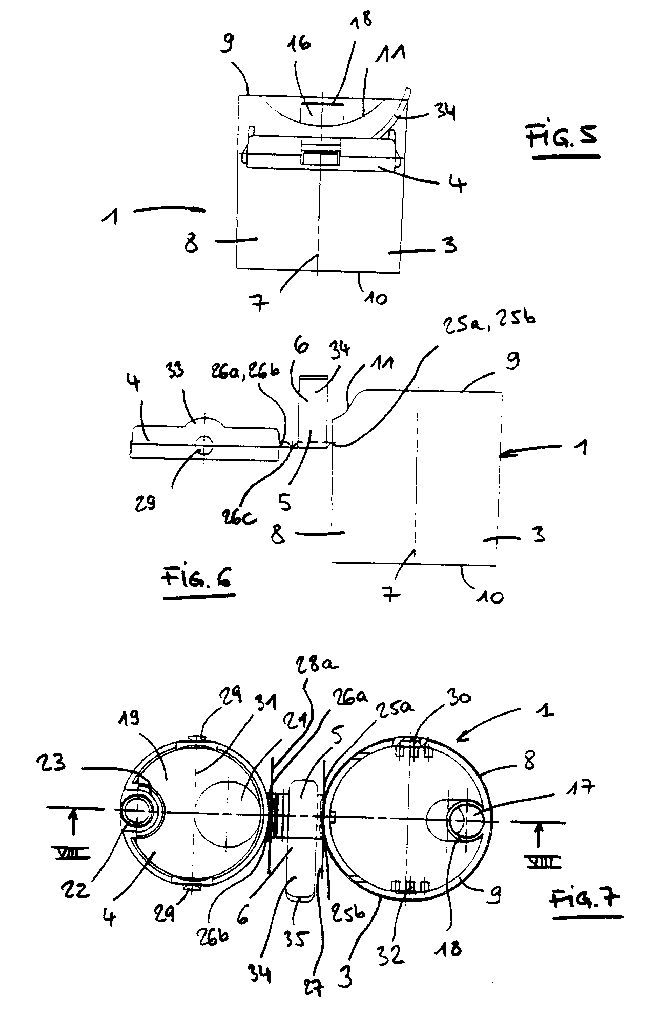

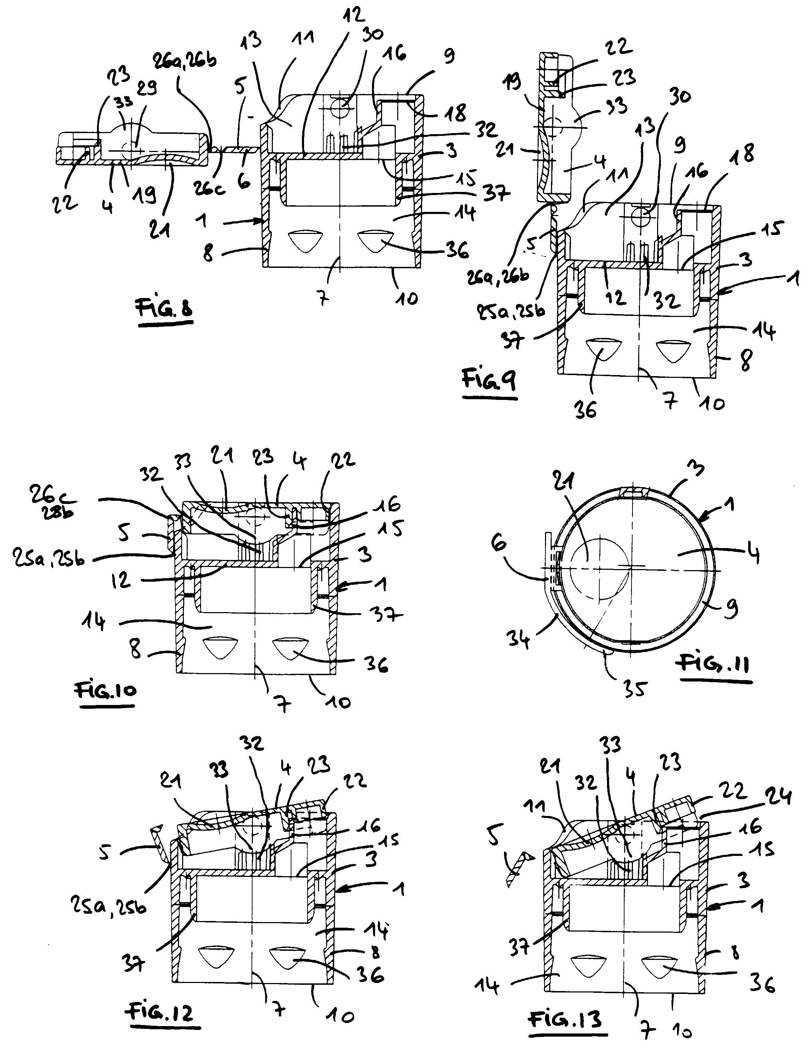

Lorsque la capsule 1 est réalisée par injection de matière plastique, elle est disposée après injection et avant que d'être montée, avec la partie de fermeture et de manoeuvre de commande 4 au moins sensiblement dans le prolongement - notamment sensiblement coplanaire - de la partie intermédiaire 5, toutes deux étant alors situées à côté de la partie de base 3 - notamment sensiblement perpendiculairement à son axe principal 7 -. Cette disposition est typiquement celle représentée sur les figures 6 et 8.

La partie intermédiaire 5 avec les deux liaisons amincies 25, 26 forme, comme il a été déjà indiqué, une simple charnière permettant un pivotement relatif sans effort substantiel, de la partie de fermeture et de manoeuvre de commande 4 par rapport à la partie de base 3. Ce pivotement est unique en vue du montage réciproque des deux parties 3, 4.

On entend par-là que la charnière ainsi réalisée n'a pas d'autre fonction - à titre de charnière - que de permettre le montage de la capsule 1.

Après injection de la capsule 1, ouverture du moule et extraction au moins partielle de la capsule 1 du moule (notamment dans l'exemple de réalisation, après extraction de la partie 4), on assure un déplacement relatif à double pivotement de la partie de fermeture et de manoeuvre de commande 4 par rapport à la partie de base 3. Ce pivotement est rendu possible grâce à la partie intermédiaire 5 avec les liaisons amincies 25, 26. Ce mouvement permet d'amener la partie 4 à coopérer avec et sur la partie 3. Il permet aussi la coopération des moyens d'association à pivotement des deux parties 3, 4.

La partie intermédiaire 5 présente à cet effet une certaine longueur comptée entre les parties 3 et 4, de manière telle que la partie 4 puisse être amenée, par le double pivotement relatif, d'une position dégagée non montée obtenue par l'injection à une position montée où elle coopère avec et sur la partie de base 3 de même que coopèrent alors les moyens d'association à pivotement. Toutefois, la partie 4 n'interfère pas inutilement lors du pivotement avec la partie de base 3. D'autre part, la partie intermédiaire 5 forme ainsi qu'il a été indiqué une languette ou une bande déchirable appartenant au système d'inviolabilité 6.

Les deux parties 3, 4, montées - une fois la capsule 1 elle-même montée- sont ajustées l'une dans l'autre. Une fois ainsi ajustées, l'une des parties - en l'occurrence la partie de base 3- est située à l'extérieur de la capsule, et l'autre - la partie 4- située à l'intérieur. La partie 4 est située vers le bord 9 de la partie 3.

La capsule 1 étant montée et en situation fermée, la face extérieure de la paroi transversale 19 de la partie 4 est sensiblement coplanaire avec le bord libre annulaire 9.

La partie de base 3 et la partie de fermeture de manoeuvre de commande 4 comportent ainsi qu'il a été déjà mentionné des moyens d'association réciproque positif à pivotement 29, 30, respectivement, en vue de l'ouverture et de la fermeture, respectivement, de la capsule 1. Ces moyens 29, 30 définissent un axe de pivotement 31 parallèle ou sensiblement parallèle aux lignes 27, 28.

L'axe 31 est placé par rapport à la capsule 1 en position médiane et plus précisément centrale ou diamétrale.

Dans les réalisations représentées, les moyens d'association 29, 30 comportent des tétons et des creux complémentaires diamétraux. Par exemple, il est prévu deux tétons 29 sur la face extérieure du bord périphérique 20 de la partie 4 et deux creux 30 sur la face interne de la paroi 8 de la partie de base 3 au voisinage de son bord 9.

L'association des moyens 29, 30 est réalisée à la fin du montage des deux parties 3 et 4. A cet effet, on poursuit le déplacement relatif d'association des deux parties 3 et 4 jusqu'à amener les moyens 29, 30 à coopérer par enfoncement à force. Les moyens 29, 30 ainsi agencés positivement ne sont alors pas normalement aisément dissociables.

Les moyens d'association à pivotement 29, 30 peuvent être réalisés autrement que par des tétons et des creux tels qu'ils viennent d'être décrits. Ces tétons et creux peuvent être inversés, s'agissant des parties 3 et 4. Il peut s'agir également de formes complémentaires de type rotule concave/rotule convexe prévues sur l'une et l'autre des parties 3, 4.

Il est prévu également sur les parties 3 et 4, respectivement des moyens 32, 33 de blocage de fin de course du déplacement par enfoncement à force, pour éviter que les moyens d'association 29, 30 n'ayant été engagés ne soient désengagés à cause d'une poursuite du déplacement d'engagement. Toutefois, ces moyens de blocage de fin de course 32, 33 n'empêchent pas le pivotement des deux parties 3, 4 autour de l'axe 31.

Selon une réalisation, les moyens de blocage de fin de course comportent deux saillies incurvées 32 sur la face interne de la paroi 8 de la partie 3 au voisinage de la paroi transversale 12 et deux saillies incurvées 33, complémentaires, ménagées par le bord 20 conformé à cet effet de la partie 4.

Il est à noter ici, en premier lieu, qu'on amène la partie 4 à coopérer avec et sur la partie 3 directement en situation de fermeture de la partie 4, sans passer par l'intermédiaire d'une situation d'ouverture. Après montage, la capsule 1 est donc fermée, le système d'inviolabilité étant effectif.

En second lieu, lorsqu'on associe les deux parties 3, 4, on amène la partie intermédiaire 5 à être contre la périphérie des parties 3 et 4 ce qui permet de constituer et de mettre en place le système d'inviolabilité 6.

Dans les réalisations représentées, la languette ou bande du système d'inviolabilité 6 est arrachable, pour la première ouverture de la capsule 1, à l'endroit des deux liaisons amincies 25, 26, à savoir les ponts. Cette languette ou bande est alors totalement détachée de la capsule 1.

La languette ou bande, peut, dans une autre réalisation, rester attachée à l'une des deux parties de la capsule 1, à savoir la partie extérieure 3, l'une seulement des deux liaisons amincies 25, 26 étant frangible, l'autre ne l'étant pas. Eventuellement, la languette ou bande restant attachée à la partie 4 tout en étant détachée de la partie 3.

La partie intermédiaire 5 formant la languette ou bande est prolongée, dans les réalisations représentées, sur un de ses deux bords, par une queue 34 incurvée, dont l'extrémité 35 opposée à la partie 5 est libre mais placée contre la périphérie de la capsule, à savoir la paroi 8. Cette queue 34 fait partie du système d'inviolabilité 6. Elle est un moyen de saisie sur lequel l'utilisateur peut tirer pour fracturer le système d'inviolabilité 6.

Le procédé d'arrachage et de fracture du système d'inviolabilité 6 lorsqu'il est totalement arrachable et séparable du reste de la capsule peut faire l'objet de trois variantes de réalisation.

Selon une variante, l'utilisateur manipule spécifiquement le système d'inviolabilité 6 en vue de l'arracher et de le fracturer, en tirant sur la queue 34, après quoi il peut ouvrir la capsule. Cette réalisation est illustrée par la figure 35 dans laquelle la capsule est dépourvue du système d'inviolabilité 6 - celui-ci ayant été totalement arraché et enlevé -, la capsule étant toutefois fermée et la figure 36 correspondant à une étape ultérieure où la capsule est ouverte.

Selon une autre variante, l'utilisateur réalise cet arrachage et fracture à l'occasion de la première ouverture, sans avoir à manipuler spécifiquement le système d'inviolabilité 6. Dans ce cas, il y a rupture appropriée de l'ensemble des liaisons amincies par cisaillement, ce qui est rendu possible par suite de la fragilité de ces liaisons, elle-même résultant de leur usage unique pour le montage. Cette variante de réalisation est illustrée par la figure 32.

Selon une autre variante, la fracture et l'enlèvement du système d'inviolabilité 6 est réalisé non en un seul temps comme précédemment mais en deux temps successifs, le premier étant lié à l'ouverture de la capsule.

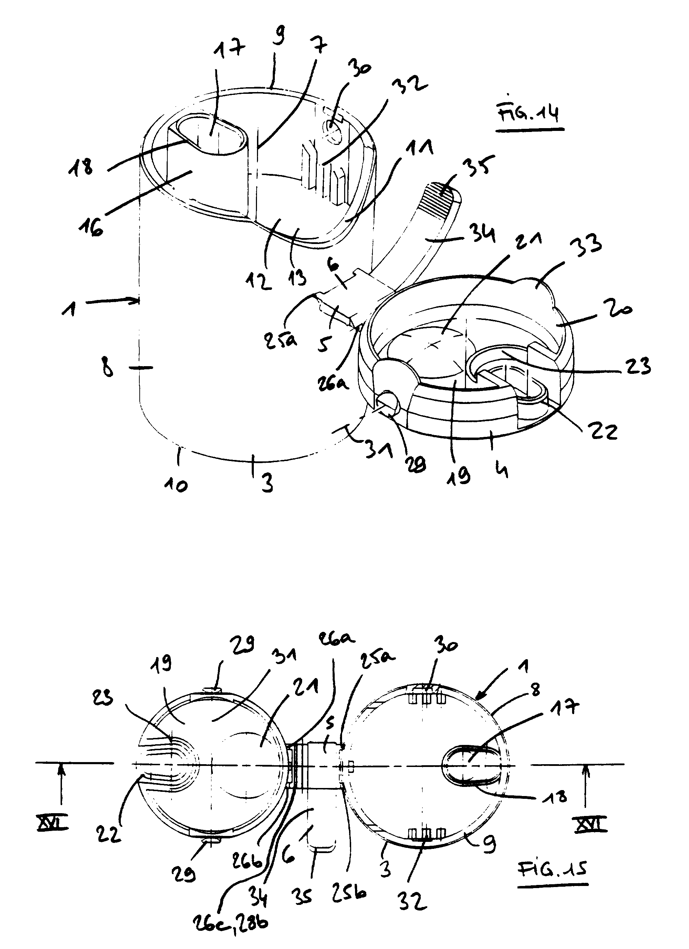

Cette variante est illustrée selon une réalisation possible par les figures 12 et 13. Dans un premier temps, l'ouverture de la capsule (partie 4) permet la rupture du système d'inviolabilité 6 au niveau des liaisons amincies 26, les liaisons 25 n'étant alors pas fracturées. Puis, dans un second temps, la capsule étant ouverte, l'utilisateur peut finir d'enlever le système d'inviolabilité 6 en fracturant les liaisons amincies 25.

Selon une autre réalisation, l'ouverture de la capsule permet la rupture du système 6 au niveau des liaisons 25, les liaisons 26 n'étant pas fracturées. Puis dans un second temps, la capsule étant ouverte, les liaisons 26 peuvent être fracturées et le système 6 enlevé.

Après injection et avant montage, l'extrémité libre 35 de la queue 34 ne dépasse pas ou ne dépasse pas substantiellement de l'encombrement hors-tout de la capsule 1.

La queue 34 et la partie 5 présentent une rigidité telle qu'elle reste contre la périphérie de la capsule 1 en l'absence de sollicitation extérieure, mais qu'elle peut être incurvée contrairement à son incurvation d'origine lorsqu'elle est saisie par l'utilisateur pour fracturer le système d'inviolabilité 6. Cette caractéristique participe de la sécurité du système d'inviolabilité qui ne peut être fracturé par mégarde ou de façon intempestive.

L'orifice d'évacuation final 24 de la capsule 1 est selon les réalisations, ménagé sur le bord 20 de la partie 4, échancré ou percé à cet effet (figure 19), ou sur la paroi 8 de la partie 3 elle-même échancrée ou percée à cet effet (figure 32) .

Selon la réalisation dans laquelle la capsule 1 est réalisée séparément du conteneur 2, la partie de base 3 comporte des moyens d'association rigide 36 avec le conteneur 2 ainsi que des moyens 37 tel que saillie, creux, collerette, joint assurant le jointage d'étanchéité entre la capsule 1 et le col du conteneur 2. Ces moyens 36, 37 sont situés dans le compartiment 14.

Selon les réalisations, les moyens d'association rigide 36 sont de type inviolable notamment par enfoncement à force ou soudage ou moyennant un vissage approprié.

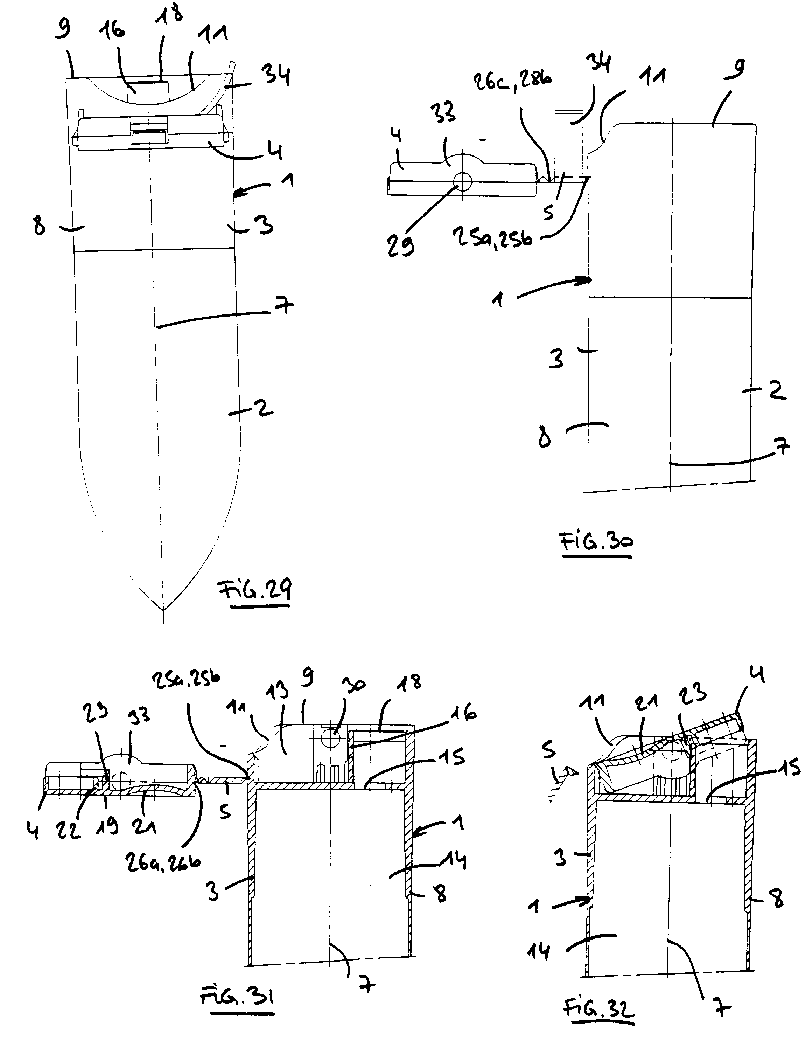

Dans le cas typique de la figure 10, les moyens 36 sont des saillies d'enfoncement à force. Dans le cas de la figure 28, il s'agit d'un filetage.

Selon une autre réalisation, la capsule 1 est associée avec le conteneur 2 et forme un ensemble unitaire avec lui, venu ainsi de fabrication.

Il est à noter qu'une fois le système d'inviolabilité 6 fracturé et totalement enlevé (dans la variante de réalisation correspondante), la capsule 1 ne comporte plus que la partie de base 3 et la partie de fermeture et de manoeuvre de commande 4 montée à pivotement sur elle, autour de l'axe 31 grâce aux moyens 29, 30.

La capsule 1 qui vient d'être décrite est réalisée par injection grâce à un dispositif d'injection et de montage approprié qui comprend un moule 38 d'injection à au moins une empreinte, comportant plusieurs pièces conformées pour permettre de mouler au moins une capsule telle qu'elle vient d'être décrite, ainsi que des moyens d'injection et des moyens d'extraction.

En général, le moule comporte une multiplicité d'empreintes.

Pour chaque empreinte il est prévu soit un, soit plusieurs points d'injection, notamment deux, écartés.

Par conséquent, on réalise l'injection depuis la partie de la base 3 et/ou la partie de fermeture et de manoeuvre de commande 4 et/ou la partie intermédiaire 5.

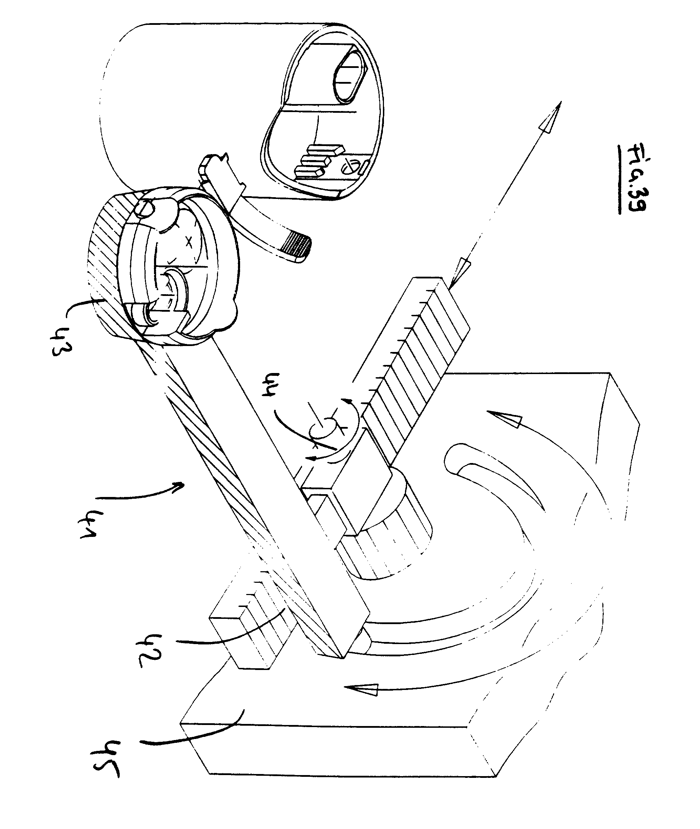

Ainsi dans la réalisation des figures 37 et 38, il est prévu deux points d'injection sur la partie 3 à l'endroit de la paroi transversale 12 et sur la partie 4, sur la face interne de la paroi 19 transversale au droit de l'enfoncement 21.

Il est à noter que les liaisons amincies 25, 26 permettent le passage de la matière plastique lors de l'injection vers et/ou depuis la partie 5.

Selon la réalisation, le moule 38 est soit de type sans tiroir, soit de type à un ou plusieurs tiroirs.

Dans le cas de la figure 37, le moule 38 est dépourvu de tiroir.

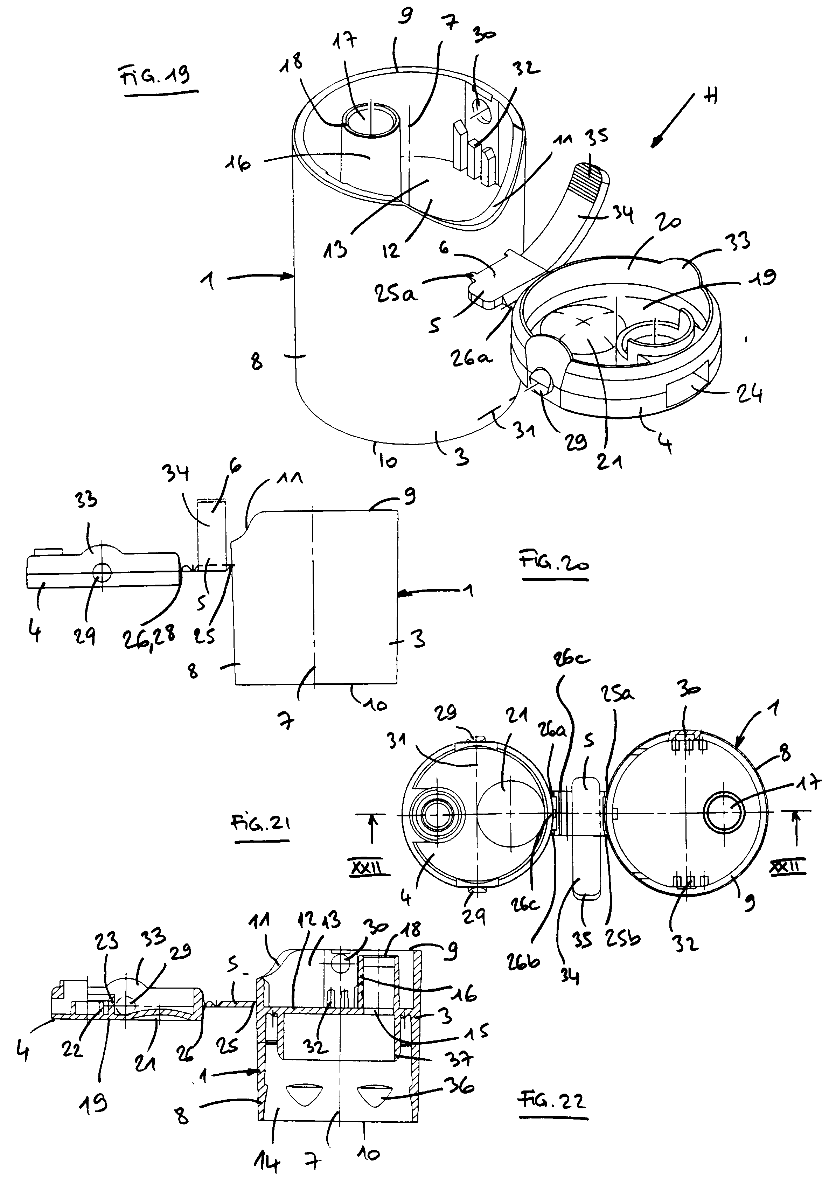

Dans le cas de la figure 38, plus spécialement adaptée à une capsule telle que la troisième variante représentée sur les figures 19 à 22, il est prévu un tiroir 38a destiné à la réalisation de l'orifice 24 ménagé dans le bord 20 de la partie 4.

Pour chaque empreinte il est prévu au moins deux pièces réciproques 39, 40 destinées spécialement à la réalisation de la partie intermédiaire 5 avec les liaisons amincies 25, 26. Une de ces pièces peut servir également à la réalisation d'autres parties de la capsule.

Le dispositif d'injection et de montage comprend en outre des moyens 41 de déplacement relatif de l'une des deux parties 3, 4 de la capsule 1 par rapport à l'autre en vue de leur montage réciproque.

Selon une réalisation possible (figure 39), ces moyens 41 sont associés ou intégrés au moule 38 et montés mobiles dans leur ensemble entre une position distale escamotée et une position proximale d'interférence grâce à des moyens d'entraînement 42 couplés en commande avec ceux du moule 38.

Les moyens 41 de déplacement relatif comportent, dans une réalisation possible, un organe pousseur 43 monté à pivotement par rapport à un support 45 et des moyens 44 d'entraînement à pivotement dudit organe pousseur 43 par rapport au support.

Selon d'autres réalisations, les moyens de montage de la capsule sont dissociés du moule lui-même et configurés autrement que ce qui vient d'être décrit.

Selon les réalisations envisagées on injecte une matière plastique unique, la capsule 1 étant monomatière ou une pluralité de matières plastiques, la capsule 1 étant multimatière, notamment bimatière.

Les matières - lorsqu'il y en a plusieurs - diffèrent par leurs propriétés mécaniques - par exemple rigidité - et/ou par leur couleur.

Selon les cas, on réalise par injection la capsule 1 seule, ou un ensemble monobloc comprenant la capsule 1 et le conteneur 2.

Dans ce dernier cas, on injecte le conteneur 2 de manière que sa partie extrême opposée à la capsule 1 soit ouverte.

La structure du dispositif qui vient d'être décrite est destinée également au montage des deux parties 3, 4 de la capsule 1.

Dans une réalisation, pour assurer le déplacement relatif de la partie 4 par rapport à la partie 3, on maintient fixe l'une des deux parties (la partie 3) dans le moule 38 préalablement ouvert et on déplace à pivotement grâce aux moyens 41 l'autre partie (la partie 4) préalablement extraite du moule.

Dans cette réalisation, le déplacement considéré est réalisé sur le site même d'injection, sans transfert substantiel de la capsule 1 dans son ensemble.

On assure ce déplacement relatif et le montage réciproque des deux parties 3, 4 immédiatement ou peu de temps après l'injection.

A cet effet, on amène les moyens de déplacement 41 depuis la position distale escamotée jusqu'à la position proximale d'interférence dans laquelle l'organe pousseur 43 est placé contre la face extérieure de la paroi transversale 19 de la partie 4. Puis, on fait pivoter l'organe pousseur 43 pour assurer le double pivotement concomitant relatif de la partie de fermeture et de manoeuvre de commande 4 précédemment indiqué.

Selon une autre réalisation, on monte la capsule en dehors du site même de sa réalisation, c'est-à-dire le moule. Dans ce cas, on reprend la capsule, après injection mais avant montage, en vue de son montage. Les moyens de déplacement réciproque prévus pour le montage de la capsule sont alors dissociés du moule lui-même. La reprise de la capsule et le maintien de l'orientation des deux parties 3 et 4 sont facilités par la présence de la partie 5 et de la queue 34.

Dans le cas où on injecte la capsule 1 seule, celle-ci ayant été montée et se trouvant donc en situation de fermeture, on l'associe alors à un conteneur 2. Cette association rigide est préférentiellement inviolable.

Le conteneur 2 utilisé est selon une réalisation possible fermé à sa partie extrême opposée à la capsule 1. On remplit alors le conteneur 2 avant que d'associer la capsule 1 et le conteneur 2.

Selon une autre réalisation possible, le conteneur 2 utilisé est ouvert à sa partie extrême opposée à la capsule 1. On associe alors le conteneur 2 et la capsule 1. Puis on remplit le conteneur 2 par sa partie extrême restée ouverte. Puis on ferme cette partie extrême, notamment par pincement et soudage.

Dans une autre réalisation, on injecte un ensemble capsule 1 et conteneur 2. Dans ce cas, la capsule 1 se trouvant montée en situation de fermeture on remplit le conteneur 2 par sa partie extrême restée ouverte, puis on ferme cette partie extrême, notamment par pincement et soudage.

## Revendications

1. Capsule (1) de fermeture destinée à un conteneur (2), en matière plastique et en une seule pièce, comprenant :
- une partie de base (3) essentiellement rigide dans son ensemble, incluant une paroi latérale périphérique (8), une paroi transversale (12) ayant un orifice (15) excentré ;
- une partie de fermeture (4) et de manoeuvre de commande, essentiellement rigide dans son ensemble, agencée pour pouvoir être montée de façon mobile à pivotement sur la partie de base (3) dans un sens ou dans l'autre, et ouvrir ou fermer, respectivement, la communication avec l'orifice (15) ;
- des moyens d'association réciproque (29, 30) à pivotement sur la partie de fermeture (4) et la partie de base (3) ;
- et une partie intermédiaire (5) multifonctionnelle placée entre la partie de base (3) et la partie de fermeture (4) et reliée à chacune d'elles par une liaison pouvant être arrachée, la capsule comprenant ainsi un système d'inviolabilité intégré caractérisée en ce que
- l'orifice (15) de la partie de base (3) et la partie intermédiaire (5) sont opposés ;
- les moyens d'association (29, 30) à pivotement sont écartés tant de l'orifice (15) que de la partie intermédiaire (5) et localisés de façon médiane, notamment centrale ;
- la partie de base (3), la partie de fermeture (4) et les moyens d'association (29,30) à pivotement sont agencés pour une course de pivotement limitée et une évacuation latérale du contenu ;
- la liaison pouvant être arrachée étant faible pour permettre l'arrachage mais suffisante pour résister aux contrainte limitées du montage.

2. Capsule (1) selon la revendication 1, caractérisée en ce que la partie intermédiaire (5) présente, hormis les liaisons amincies (25, 26), une certaine tenue ou rigidité tout en pouvant être manipulée pour l'arrachage et la fracture du système d'inviolabilité (6).

3. Capsule (1) selon l'une quelconque des revendications 1 et 2, caractérisée en ce que la partie intermédiaire (5) avec les liaisons amincies (25, 26) forme fonctionnellement - notamment constitue -, une fois la capsule (1) montée, le système d'inviolabilité (6) avant toute première ouverture.

4. Capsule (1) selon l'une quelconque des revendications 1 à 3, caractérisée en ce qu'une liaison amincie est en une ou plusieurs parties ; est amincie en épaisseur et/ou en longueur ; sous la forme d'une ligne et/ou de pont ; est continue ou discontinue.

5. Capsule (1) selon l'une quelconque des revendications 1 à 4, caractérisée en ce qu'une liaison amincie définit, un - ou au moins un - axe d'articulation, notamment au moins deux axes d'articulation parallèles, écartés mais proches l'un de l'autre, s'étendant parallèlement à l'axe de pivotement (31) des moyens d'association réciproque (29,30).

6. Capsule (1) selon l'une quelconque des revendications 1 à 5, caractérisée en ce que les deux liaisons amincies (25, 26) s'étendent le long de deux directions (27, 28) au moins sensiblement parallèles entre elles.

7. Capsule (1) selon l'une quelconque des revendications 1 à 6, caractérisée en ce que les deux liaisons amincies (25, 26) sont frangibles lors de la première ouverture de la capsule (1), de manière à assurer une séparation totale du système d'inviolabilité des parties (3) et (4) de la capsule (1).

8. Capsule (1) selon l'une quelconque des revendications 1 à 7, caractérisée en ce que la partie de base (3) et la partie de fermeture (4) sont ajustées l'une dans l'autre, l'une - telle que la partie de base (3)- à l'extérieur, l'autre - telle que la partie de fermeture (4)- à l'intérieur.

9. Capsule (1) selon la revendication 8, caractérisée en ce que la capsule (1) étant montée et en situation fermée, la face extérieure de la paroi transversale (19) de la partie de fermeture (4) est sensiblement coplanaire avec le bord libre annulaire (9) d'extrémité correspondant de la partie de base (3).

10. Capsule (1) selon l'une quelconque des revendications 1 à 9, caractérisée en ce que la partie intermédiaire (5) présente une certaine longueur entre la partie de base (3) et la partie de fermeture (4), telle que, d'une part, la partie de fermeture (4) puisse être amenée, par un double pivotement relatif, d'une position dégagée non montée obtenue par l'injection à une position montée où elle coopère avec et sur la partie de base (3), de même que coopèrent les moyens d'association (29, 30), et ce sans interférer inutilement lors du pivotement avec la partie de base (3) ; et que, d'autre part, la partie intermédiaire (5) forme une languette ou une bande déchirable appartenant au système d'inviolabilité (6).

11. Capsule (1) selon la revendication 10, caractérisée en ce que la languette ou bande du système d'inviolabilité (6) est arrachable, pour la première ouverture de la capsule (1), à l'endroit d'une liaison amincie (25, 26), cette languette ou bande étant détachée de l'une des deux parties de la capsule (1), tel que la partie intérieure, et restant attachée à l'autre des deux parties, tel que la partie extérieure.

12. Capsule (1) selon la revendication 10, caractérisée en ce que la languette ou bande du système d'inviolabilité (6) est arrachable, pour la première ouverture de la capsule (1), à l'endroit des deux liaisons amincies (25, 26), cette languette ou bande étant alors totalement détachée des deux parties de la capsule (1).

13. Capsule (1) selon l'une quelconque des revendications 1 à 12, caractérisée en ce que la partie intermédiaire (5) est reliée d'une part à la face extérieure de la paroi latérale périphérique (8) de la partie de base (3), au voisinage de son bord libre annulaire (9) où se trouve la partie de fermeture (4) de commande une fois montée et, d'autre part, sur le bord extérieur périphérique de la partie de fermeture (4).

14. Capsule (1) selon la revendication 13, caractérisée en ce que la partie intermédiaire (5) est reliée à la face extérieure de la paroi latérale périphérique (8) de la partie de base (3), dans une zone formant une découpe en échancrure (11) apte à permettre l'enfoncement, à cet endroit, par pivotement, par l'utilisateur, de la partie de fermeture (4) en vue de l'ouverture de la capsule (1).

15. Capsule (1) selon l'une quelconque des revendications 1 à 14, caractérisée en ce que la partie intermédiaire (5) est reliée à la face extérieure du bord latéral périphérique (20) de la partie de fermeture (4) pourvue, par ailleurs, d'une paroi transversale (19).

16. Capsule (1) selon l'une quelconque des revendications 1 à 15, caractérisée en ce que la partie intermédiaire (5) est sensiblement diamétralement opposée à l'orifice (17), lui-même excentré de manière à être sensiblement adjacent à la paroi latérale (8).

17. Capsule (1) selon l'une quelconque des revendications 1 à 16, caractérisée en ce que la partie intermédiaire (5) est reliée à la partie de base (3) ou à la partie de fermeture (4) respectivement par au moins deux ponts frangibles écartés l'un de l'autre le long de la direction de l'axe de pivotement formé par cette liaison amincie.

18. Capsule (1) selon la revendication 17, caractérisée en ce que les ponts frangibles (25a, 25b ; 26a, 26b) ont une longueur, entre la partie intermédiaire (5) et l'une, l'autre, respectivement, des deux autres parties de la capsule (1), telle que la capsule (1) puisse à partir de sa situation d'injection, être montée par un mouvement de double pivotement et, qu'une fois la capsule (1) ainsi montée, la partie intermédiaire (5) soit contre sa périphérie, sans contrainte excessive appliquée aux ponts (25a, 25b ; 26a, 26b).

19. Capsule (1) selon l'une quelconque des revendications 1 à 18, caractérisée en ce qu'une des deux liaisons amincies (25, 26) comporte des ponts (25a, 25b ; 26a, 26b) ; et l'autre liaison amincie (26, 25) comporte des ponts (26a, 26b ; 25a, 25b) attenants à la partie correspondante de la capsule (1) et une ligne ou zone amincie (26c) proche des ou attenante aux ponts.

20. Capsule (1) selon la revendication 19, caractérisée en ce que l'écartement entre la ligne (27, 28) définie par les ponts et la ligne ou zone amincie (26c, 28b) proche ou attenante est telle qu'elle permet, au moins en partie, de compenser le décalage entre les faces extérieures (8, 20) des deux parties (3, 4) de la capsule (1), celles-ci étant agencées l'une dans l'autre.

21. Capsule (1) selon la revendication 20, caractérisée en ce que ledit écartement est de l'ordre de grandeur de l'épaisseur de la paroi (8) de la partie de la capsule (1) située à l'extérieur.

22. Capsule (1) selon l'une quelconque des revendications 19 à 21, caractérisée en ce que la ligne ou zone amincie (26c) permet à cet endroit, à la partie intermédiaire (5), de former un angle ou d'être incurvée, l'ouverture de l'angle ou la concavité étant tournée vers les parties (3, 4) en situation de fermeture.

23. Capsule (1) selon l'une quelconque des revendications 19 à 22, caractérisée en ce qu'elle comporte deux ponts (25a, 25b) du côté de la partie de base (3) et deux ponts (26a, 26b) et une ligne ou zone amincie (26c) du côté de la partie de fermeture (4).

24. Capsule (1) selon l'une des revendications 17 à 23, caractérisée en ce que l'écartement maximal entre les ponts (25a, 25b ; 26a, 26b) compté le long des lignes d'articulation est égal ou voisin de la largeur de la partie intermédiaire (5) et relativement faible, comparé à la dimension transversale à savoir le diamètre de la capsule (1), par exemple de l'ordre d'une fraction seulement.

25. Capsule (1) selon l'une quelconque des revendications 19 à 24, caractérisée en ce qu'elle comporte deux ponts (25a, 25b) du côté de la partie de base (3) et deux ponts (26a, 26b) du côté de la partie de fermeture (4).

26. Capsule (1) selon l'une quelconque des revendications 1 à 25, caractérisée en ce que la partie intermédiaire (5) est prolongée, sur au moins un de ses deux bords, par une queue (34) incurvée dont l'extrémité opposée (35) est libre mais placée contre la périphérie de la capsule (1), notamment la paroi latérale (8) de la partie extérieure, telle que la partie de base (3) ; la queue (34) faisant partie du système d'inviolabilité (6) et formant un moyen de saisie sur lequel l'utilisateur peut tirer pour fracturer le système d'inviolabilité (6).

27. Capsule (1) selon la revendication 26, caractérisée en ce qu'après injection et avant montage de la capsule (1) l'extrémité libre (35) de la queue (34) ne dépasse pas ou ne dépasse pas substantiellement l'encombrement hors-tout de la capsule (1).

28. Capsule (1) selon l'une quelconque des revendications 26 et 27, caractérisée en ce que la queue (34), au moins, présente une rigidité telle qu'elle reste contre la périphérie de la capsule (1) en l'absence de sollicitation extérieure mais qu'elle peut être incurvée lorsqu'elle est saisie par l'utilisateur pour fracturer le système d'inviolabilité (6).

29. Capsule (1) selon l'une quelconque des revendications 1 à 28, caractérisée en ce que les moyens d'association réciproque (29,30) comportent des reliefs ou surfaces complémentaires des deux parties (3, 4) tels que des rotules concaves/convexes ou des tétons et des creux, tels que deux tétons (29) sur le bord extérieur périphérique (20) de la partie de fermeture (4) et deux creux (30) sur la face interne de la paroi latérale périphérique (8) de la partie de base (3) au voisinage de son bord libre annulaire (9).

30. Capsule (1) selon l'une quelconque des revendications 1 à 29, caractérisée en ce qu'elle comporte en outre des moyens (32, 33) de blocage de fin de course de déplacement, tel qu'enfoncement à force, pour éviter que les moyens d'association (29, 30) ayant été engagés ne soient désengagés à cause d'une poursuite du déplacement d'engagement ; ces moyens de blocage (32, 33) de fin de course n'empêchant pas toutefois le pivotement d'ouverture ou fermeture, respectivement de la capsule (1).

31. Capsule (1) selon la revendication 30, caractérisée en ce que les moyens (32, 33) de blocage de fin de course comportent une ou plusieurs saillies (32) incurvées sur la face interne de la paroi (8) latérale périphérique de la partie de base (3) et une ou plusieurs saillies incurvées (33), complémentaires, ménagées par le bord (20) de la partie de fermeture (4).

32. Capsule (1) selon l'une quelconque des revendications 1 à 31, caractérisée en ce que la paroi transversale (12) de la partie de base (3) est placée en position intermédiaire entre les deux bords (9, 10) libres annulaires d'extrémité de sa paroi latérale périphérique (8) ; en ce qu'elle comporte une cheminée (16) attenante à l'orifice (15) ménagé dans la paroi transversale (12), cette cheminée (16) étant dirigée vers la partie de fermeture (4) et comportant à son extrémité un orifice de décharge (17) apte à permettre l'évacuation ou expulsion radiale du contenu du conteneur auquel est associé la capsule.

33. Capsule (1) selon la revendication 32, caractérisée en ce que l'orifice de décharge (17) est obturé, lorsque la capsule (1) est en situation de fermeture, par la partie de fermeture (4) ; la paroi transversale (19) de la partie de fermeture (4) et/ou la cheminée (16) étant pourvue de moyens (22) tels que saillie, creux, joint, lèvre, lèvre autojointante aptes à assurer une étanchéité suffisante de la fermeture.

34. Capsule (1) selon l'une quelconque des revendications 32 et 33, caractérisée en ce que la paroi transversale (19) de la partie de fermeture (4) et la cheminée (16) sont pourvues de moyens de confinement (23) complémentaire tels que saillie, creux, joint, lèvre, coopérant lorsque la capsule (1) est en situation d'ouverture et aptes à confiner et guider le contenu à évacuer entre l'orifice de décharge (17) de la cheminée (16) et l'orifice (24) final d'évacuation du dit contenu dont est pourvue la capsule (1), de manière à assurer une évacuation ou expulsion radiale.

35. Capsule (1) selon la revendication 34, caractérisée en ce que l'orifice d'évacuation (24) est ménagé sur le bord extérieur périphérique (20) de la partie de fermeture (4), échancré ou percé à cet effet ; et/ou sur la paroi latérale périphérique (8) de la partie de base (3) échancrée ou percée à cet effet.

36. Capsule (1) selon l'une quelconque des revendications 1 à 35, caractérisée en ce que les moyens d'association réciproque (29,30) sont agencés pour que, la capsule étant de type pivotant, en situation d'ouverture, la première moitié de la partie de fermeture (4) située vers l'orifice (24) soit située à l'extérieur tandis que la seconde moitié de la partie de fermeture (4) soit située à l'intérieur.

37. Capsule (1) selon l'une quelconque des revendications 1 à 36, caractérisée en ce que la course de pivotement de la partie de fermeture (4) entre la situation d'ouverture et la situation de fermeture est limitée pour être nettement inférieure à 90°, de l'ordre de 10° à 30° environ ; l'intérieur de la capsule restant invisible même en situation d'ouverture.

38. Capsule (1) selon l'une quelconque des revendications 1 à 37, caractérisée en ce qu'elle présente un contour circulaire.

39. Capsule (1) selon l'une quelconque des revendications 1 à 38, caractérisée en ce qu'elle est monomatière ou multimatière, notamment bimatière.

40. Capsule (1) selon l'une quelconque des revendications 1 à 39, caractérisée en ce que la partie de base (3) comporte des moyens d'association rigide (36) avec un conteneur (2) séparé tel qu'un tube ou flacon, notamment de type inviolable, ainsi que des moyens (37) tel que saillie, creux, collerette, joint, assurant le jointage d'étanchéité entre la capsule (1) et le col du conteneur (2).

41. Capsule (1) selon l'une quelconque des revendications 1 à 40, caractérisée en ce qu'elle est venue de fabrication et forme un ensemble unitaire avec un conteneur (2) tel qu'un tube ou flacon, prolongeant la paroi latérale périphérique (8) de la partie de base (3) de la capsule (1) à l'opposé de la partie de fermeture (4).

42. Procédé dans lequel on injecte de la matière plastique dans un moule (38) en vue de réaliser une capsule (1) de fermeture d'un conteneur (2), en matière plastique, en une seule pièce selon l'une quelconque des revendications 1 à 41, dans lequel la partie intermédiaire (5) avec les liaisons amincies (25, 26) forme fonctionnellement, lors de l'injection, un passage continu pour la matière plastique injectée ; et une fois la capsule (1) injectée mais avant montage, une charnière de guidage à double effet à usage unique pour l'opération de montage, d'une part entre la partie de base (3) et la partie intermédiaire (5), d'autre part entre la partie intermédiaire (5) et la partie de fermeture (4), en vue du montage réciproque des deux parties de la capsule (1), respectivement des moyens d'association réciproque (29, 30) à pivotement.

43. Procédé selon la revendication 42, caractérisé en ce qu'on réalise l'injection avec la partie de fermeture (4) au moins sensiblement dans le prolongement - notamment sensiblement coplanaire - de la partie intermédiaire (5), toutes deux étant alors situées à côté de la partie de base (3) - notamment sensiblement perpendiculairement à son axe principal (7) -.

44. Procédé selon l'une quelconque des revendications 42 et 43, caractérisé en ce qu'on réalise l'injection à partir d'un seul ou de plusieurs points d'injection écartés ; depuis la partie de la base (3) et/ou la partie de fermeture (4) et/ou la partie intermédiaire (5).

45. Procédé selon l'une quelconque des revendications 42 à 44, caractérisé en ce qu'une liaison amincie (25, 26) est apte à permettre le passage ou la répartition convenable de la matière plastique, lors de l'injection, vers et/ou depuis la partie intermédiaire (5).

46. Procédé selon l'une quelconque des revendications 42 à 45, caractérisé en ce qu'on injecte une matière plastique unique, la capsule (1) étant monomatière ; ou une pluralité de matières plastiques, la capsule (1) étant multimatière, notamment bimatière.

47. Procédé selon l'une quelconque des revendications 42 à 46, caractérisé en ce qu'on réalise par injection la capsule (1) seule ; ou un ensemble comprenant la capsule (1) et un conteneur (2), tel qu'un tube ou flacon, prolongeant la paroi latérale périphérique (8) de la partie de base (3) de la capsule (1).

48. Procédé selon la revendication 47, caractérisé en ce qu'on injecte le conteneur (2) de manière que la partie extrême opposée à la capsule (1) soit ouverte.

49. Procédé selon l'une quelconque des revendications 42 à 48 dans lequel, après injection et extraction partielle de la capsule (1) précédemment réalisée par injection, on assure un déplacement relatif à double pivotement de la partie de fermeture (4) par rapport à la partie de base (3), grâce à la partie intermédiaire (5) avec les deux liaisons amincies (25, 26), afin d'amener la partie de fermeture (4) à coopérer avec et sur la partie de base (3), de même que les moyens d'association réciproque (29, 30) à pivotement qu'elles comportent.

50. Procédé selon la revendication 49, caractérisé en ce qu'on fait à coopérer les moyens d'association réciproque (29, 30) à pivotement de la partie de base (3) et de la partie de fermeture (4) à la fin du déplacement relatif d'association de ces deux parties, par déplacement tel qu'enfoncement à force de manière que les moyens ainsi associés positivement ne soient pas normalement aisément dissociables.

51. Procédé selon l'une quelconque des revendications 49 et 50, caractérisé en ce qu'on amène la partie de fermeture (4) à coopérer avec et sur la partie de base (3) par pivotement relatif de la partie de fermeture (4) par rapport à la partie intermédiaire (5) et de la partie intermédiaire (5) par rapport à la partie de base (3) de manière que la partie de fermeture (4) soit placée directement en situation de fermeture, sans passer par l'intermédiaire d'une situation où elle est montée ouverte.

52. Procédé selon l'une quelconque des revendications 49 à 51, caractérisé en ce que lorsqu'on déplace relativement la partie de fermeture (4) par rapport à la partie de base (3), on amène la partie intermédiaire (5) à être contre la périphérie de la partie de base (3) et/ou de la partie de fermeture (4) ; et on constitue et on met ainsi en place le système d'inviolabilité (6).

53. Procédé selon l'une quelconque des revendications 49 à 52, caractérisé en ce que pour assurer le déplacement relatif de la partie de fermeture (4) par rapport à la partie de base (3), on maintient fixe l'une des deux parties - tel que la partie de base (3) - celle-ci étant placée dans l'une des parties du moule d'injection préalablement ouvert et on déplace à pivotement l'autre partie - tel que la partie de fermeture (4) -.

54. Procédé selon l'une quelconque des revendications 49 à 53, caractérisé en ce qu'on assure le déplacement relatif de la partie de fermeture (4) par rapport à la partie de base (3) et le montage réciproque des deux parties sur le site même d'injection, sans transfert substantiel de la capsule (1) dans son ensemble.

55. Procédé selon l'une quelconque des revendications 49 à 54, caractérisé en ce qu'on assure le déplacement relatif de la partie de fermeture (4) par rapport à la partie de base (3) et le montage réciproque de deux parties immédiatement ou peu de temps après l'injection.

56. Procédé selon l'une quelconque des revendications 42 à 55, dans lequel on injecte la capsule (1) seule, sans conteneur (2), caractérisé en ce que la capsule (1) ayant été montée et se trouvant ainsi en situation de fermeture, on l'associe à un conteneur (2), tel qu'un tube ou flacon, notamment de façon inviolable notamment par enfoncement à force ou soudage ou moyennant un vissage approprié.

57. Procédé selon la revendication 56, caractérisé en ce que soit le conteneur (2) utilisé est initialement fermé à sa partie extrême opposée à la capsule (1) et on remplit le conteneur (2) avec le contenu avant que d'associer la capsule (1) et le conteneur (2) ; soit le conteneur (2) utilisé est initialement ouvert à sa partie extrême opposée à la capsule (1), on associe ensuite le conteneur (2) et la capsule (1) , puis on remplit le conteneur (2) par sa partie extrême restée ouverte, puis on ferme cette partie extrême notamment par pincement et soudage.

58. Procédé selon l'une quelconque des revendications 42 à 55, dans lequel on injecte un ensemble capsule (1) et conteneur (2), caractérisé en ce que la capsule (1) ayant été montée et se trouvant en situation de fermeture, on remplit le conteneur (2) par sa partie extrême opposée à la capsule (1) et restée ouverte, puis on ferme cette partie extrême notamment par pincement et soudage.

59. Dispositif pour la mise en oeuvre du procédé selon l'une quelconque des revendications 42 à 58 qui comprend un moule d'injection (38) à au moins une empreinte, comportant plusieurs pièces conformées pour permettre de mouler au moins une capsule (1) en une seule pièce selon l'une quelconques des revendications 1 à 41, des moyens d'injection et des moyens d'extraction.

60. Dispositif selon la revendication 59, caractérisé en ce que pour chaque empreinte il est prévu soit un, soit plusieurs points d'injection, notamment deux.

61. Dispositif selon l'une quelconque des revendications 59 et 60, caractérisé en ce que le moule (38) est soit de type sans tiroir, soit de type à un ou plusieurs tiroirs (38a).

62. Dispositif selon l'une quelconque des revendications 59 à 60, caractérisé en ce que pour chaque empreinte il est prévu au moins deux pièces réciproques destinées à la réalisation par injection de la partie intermédiaire (5) de la capsule (1) avec les liaisons amincies (25, 26).

63. Dispositif selon l'une quelconque des revendications 59 à 62, caractérisé en ce que chaque empreinte du moule est conformée pour le moulage par injection de la seule capsule (1) ou d'un ensemble capsule (1) - conteneur (2).

64. Dispositif selon l'une quelconque des revendications 59 à 63, caractérisé en ce qu'il comprend en outre des moyens de déplacement relatif (41) à double pivotement de la partie de fermeture (4) par rapport à la partie de base (3) associés ou intégrés au moule (38) et montés mobiles dans leur ensemble entre une position distale escamotée et une position proximale d'interférence, grâce à des moyens d'entraînement (42) couplés en commande avec ceux du moule.

65. Dispositif selon la revendication 64, caractérisé en ce que les moyens de déplacement relatif comportent un organe pousseur (43) monté à pivotement par rapport à un support et des moyens d'entraînement (42) à pivotement du dit organe pousseur (43) par rapport au support.
